# EUROPEAN PATENT APPLICATION

(11) **EP 2 631 113 A1**
(43) Date of publication of application: **28.08.2013**
(21) Application number: 11834459.7
(22) Date of filing: 20.10.2011
(51) Int. Cl.: B60N 2/44, B60N 5/00

(54) **SEAT DEVICE AND METHOD FOR DISPOSING SEAT OCCUPANCY SENSOR USED THEREIN**

(30) Priority: 22.10.2010 JP 2010237633; 22.10.2010 JP 2010237223; 22.10.2010 JP 2010237222; 22.10.2010 JP 2010237631
(71) Applicant: Fujikura Ltd., Tokyo 135-8512 (JP)
(72) Inventor: NAKAZAKI Shigeru, Sakura-shi Chiba 285-8550 (JP)
(74) Representative: Grünecker, Kinkeldey, Stockmair & Schwanhäusser
(86) International application number: PCT/JP2011/074224
(87) International publication number: WO 2012/053620

(57) **Abstract**

Provided is a seat device capable of appropriately detecting a load of a sitting person.

A seat device (9) includes a backrest (96), a cushion pad (93), a support member (92) supporting the cushion pad (93), and a seat occupancy sensor (1) including at least one pressure sensitive switch (40A) and disposed below the cushion pad (93), wherein the pressure sensitive switch (40A) is disposed at the front side of a hip point (HP) of a person formally sitting on the seat device.

## Description

### Technical Field

The present invention relates to a seat device and a method for disposing a seat occupancy sensor used therein, and particularly, to a seat device capable of appropriately detecting sitting of a person while preventing a discomfort caused by a seat occupancy sensor and a method for disposing a seat occupancy sensor used therein.

### Background Art

As one of safety systems of a vehicle, an alarm system has been commercially used which detects wearing of a seat belt when a person gets on a vehicle and generates an alarm when the person does not wear the seat belt. The alarm system detects the sitting of the person and the wearing of the seat belt and generates an alarm in a case where the person does not wear the seat belt when the person sits on a seat. For the detection of the sitting of the person, in some cases, a seat occupancy sensor is used which is disposed in a seat position inside a seat and detects a load generated by the sitting of the person.

Patent Document 1 discloses a seat device with such a seat occupancy sensor. The seat occupancy sensor of the seat device disclosed in Patent Document 1 includes a plurality of on-off type pressure sensitive switches. Then, in the seat device, the seat occupancy sensor is disposed between a surface skin of a seat and a cushion pad, and the pressure sensitive switches are turned on when a pressure is applied to the respective pressure sensitive switches, thereby detecting the sitting of the person.

### Citation List

### Patent Document

[Patent Document 1] Japanese Patent Application Laid-Open No. 09-315199

### Summary of Invention

### Objects to be Achieved by the Invention

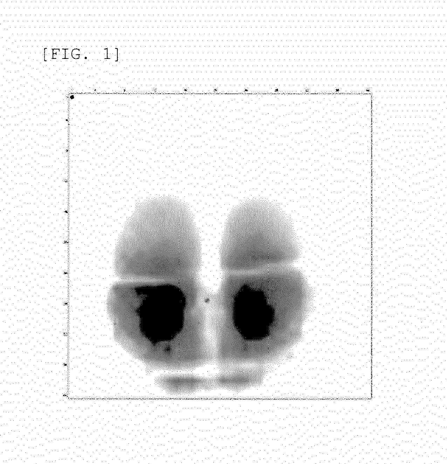

FIG. 1 is a diagram illustrating a distribution of a load which is applied from a person to a cushion pad of a seat through a surface skin while the person formally sits on the seat. In FIG. 1, the darker color portion indicates a state where a larger load is applied to the cushion pad. Since only the surface skin is interposed between the person and the cushion pad while the person sits on the seat, the largest load is applied to a portion where a hip of the person is positioned on the cushion pad as illustrated in FIG. 1. Then, in the seat occupancy sensor disclosed in Patent Document 1, since the pressure sensitive switch is disposed at the portion where the hip of the person is positioned on the cushion pad, the sitting of the person may be detected.

However, in the seat device disclosed in Patent Document 1, since the seat occupancy sensor is disposed between the surface skin and the cushion pad as described above, there is a case in which the person sitting on the seat may experience a discomfort at the seat portion of the seat by receiving a sensation of touch different from that of the cushion pad from the seat occupancy sensor through the surface skin.

Therefore, it is an object of the invention to provide a seat device capable of appropriately detecting sitting of a person while preventing a discomfort caused by a seat occupancy sensor and a method for disposing a seat occupancy sensor used therein.

### Means for Achieving the Objects

The inventor has carefully examined a method for preventing a discomfort caused by such a seat occupancy sensor. As a result, a conclusion is obtained in which the seat occupancy sensor may be disposed below the cushion pad of the seat in order to prevent the discomfort caused by the seat occupancy sensor. In this way, in the seat provided with the seat occupancy sensor, since the cushion pad is interposed between the sitting person and the seat occupancy sensor, it is possible to prevent the discomfort caused by the seat occupancy sensor when the person sits on the seat.

However, the inventor has found that the load applied to the seat caused by the sitting of the person tends to be widely distributed toward the lower side of the cushion pad and a large pressure is applied from the cushion pad in a place deviated from the portion of the hip of the person below the cushion pad attached with the backrest as in the vehicle seat. Accordingly, a problem arises in that the load applied to the cushion pad due to the sitting is not appropriately transmitted to the seat occupancy sensor when the seat occupancy sensor is disposed below the cushion pad. Therefore, the inventor has further carefully examined this problem and contrived the invention.

According to the invention, there is provided a seat device including: a backrest; a cushion pad; a support member that supports the cushion pad; and a seat occupancy sensor that includes at least one pressure sensitive switch and is disposed below the cushion pad, wherein the pressure sensitive switch is disposed at the front side of a hip point of a person formally sitting on the seat device.

According to such a seat device, since the seat occupancy sensor is disposed below the cushion pad, the discomfort caused by the seat occupancy sensor may be prevented. Further, the inventor has found that a comparatively large pressure is applied from the cushion pad at the front side of the hip point of the person formally sitting on the seat device below the cushion pad in a case where a load is applied to the cushion pad when the person formally sits on the seat device provided with the backrest. The inventor considers the reason as below. That is, when the person formally sits on the seat device provided with the backrest, the back of the person comes into contact with the backrest, and the back is pressed by the backrest, so that the force applied to the back presses the hip of the person forward. Accordingly, the hip of the sitting person presses the cushion pad in the vertical direction by the gravity, and presses the cushion pad forward by the force from the back. In this way, the pressure which is applied from the cushion pad relatively increases at the front side of the hip point of the person formally sitting on the seat device compared to the other portions. Accordingly, according to such a seat device, since the pressure sensitive switch is disposed at the front side of the hip point of the person formally sitting on the seat device, the sitting of the person may be appropriately detected.

Furthermore, in the specification, the "formal sitting" means that the person sits on the seat device while the hip is present at the deep position of the seat surface and the back comes into contact with the backrest. Further, the "hip point" indicates a point in which the hip is present at the lowest side while the person sits on the seat device.

Further, the seat occupancy sensor may include at least two pressure sensitive switches, and at least one of the pressure sensitive switches may be disposed at each of the left and right sides about a center line that is parallel to the front to rear direction of the cushion pad and passes through the center in the width direction.

In general, the person sitting on the seat sits at the center of the cushion pad in the width direction, and the left and right pelvises of the person press the cushion pad at the left and right sides of the center line passing through the center. Meanwhile, it is difficult to mention that the baggage is placed at the center of the cushion pad in the width direction. Accordingly, according to such a seat device, the sitting of the person may be appropriately detected by the pressure sensitive switches disposed at the left and right sides of the center line, and hence it is possible to prevent a problem in which the baggage is erroneously detected.

Moreover, at least a pair of the pressure sensitive switches disposed at the left and right sides of the center line may be disposed along the width direction of the cushion pad.

The person sitting on the seat generally sits on the seat in the front direction. At this time, the left and right pelvises of the person are arranged in parallel in the width direction of the cushion pad and press the cushion pad. Accordingly, according to such a seat device, since at least a pair of the pressure sensitive switches disposed at the left and right sides about the center line is arranged in parallel in the width direction of the cushion pad, the sitting of the person may be further appropriately detected.

Moreover, at least a pair of the pressure sensitive switches disposed at the left and right sides of the center line may be disposed at symmetrical positions about the center line.

Since the person sitting on the seat generally sits on the seat in the front direction at the center of the cushion pad in the width direction, the left and right pelvises of the person are arranged in parallel at the bilateral symmetrical positions about the center line and press the cushion pad. Accordingly, according to such a seat device, the sitting of the person may be further appropriately detected.

Further, the support member may be a seat pan, and the seat occupancy sensor may be disposed between an upper surface of the seat pan and the cushion pad. Alternatively, the support member may be a plurality of springs laid across a seat frame, and the seat occupancy sensor may be disposed between the spring and the cushion pad. Alternatively, the support member may be a plurality of springs laid across a seat frame, and the seat occupancy sensor may be disposed between the seat frame and the cushion pad. Alternatively, the seat occupancy sensor may be fixed to a bottom surface of the cushion pad, and the lower side of the seat occupancy sensor fixed to the bottom surface may be formed as a space.

Further, at least a part of the pressure sensitive switches may be disposed at the front side of a band-like region that extends in the width direction of the cushion pad and becomes a maximum load region on the seat pan caused by the person formally sitting on the seat device.

In a case where the person formally sits on the seat device, the load caused by the hip is the largest, and the left and right hips are arranged in parallel in the width direction of the cushion pad. For this reason, the inventor has found that the load application region on the seat pan extends in the width direction of the cushion pad. Further, as described above, the load caused by the hip is applied the cushion pad in the vertical direction and the front direction, and the front side of the cushion pad is pressed by the thighs of the person. Accordingly, according to such a seat device, since at least a part of the pressure sensitive switch is disposed at the front side of the band-like region that extends in the width direction of the cushion pad and becomes the maximum load region on the seat pan, the sitting of the person may be appropriately detected.

Furthermore, in the specification, the maximum load region indicates a region that receives a pressure of 90 or more in a case where the pressure in a place in which the seat pan receives the smallest pressure from the cushion pad is set to 0 and the pressure in a place in which the seat pan receives the largest pressure from the cushion pad is set to 100.

Moreover, each pressure sensitive switch of at least the pair of pressure sensitive switches disposed at the left and right sides of the center line may be disposed so as to at least partially overlap the band-like region.

According to such a seat device, since a large load may be applied to the pressure sensitive switch, the sitting of the person may be further appropriately detected.

Further, the pressure sensitive switch close to the band-like region may be disposed at a position far from the center line in relation to the pressure sensitive switch far from the band-like region.

As described above, the person sitting on the seat generally sits at the center of the cushion pad in the width direction. Accordingly, the seat pan is pressed by the largest force in the vicinity of the center of the cushion pad in the width direction in the band-like region which becomes the above-described maximum load region. Then, the pressure decreases as it moves away from the center of the cushion pad in the width direction. Accordingly, according to such a seat device, it is possible to suppress a difference in the pressure applied to the respective pressure sensitive switches.

Further, the pressure sensitive switch may include a pair of flexible resinous insulating sheets, a sheet-like spacer that is interposed between the pair of insulating sheets and is provided with at least one opening, and a pair of electrodes that is provided on the respective surfaces of the pair of insulating sheets and faces each other through the opening, and a resistance value of at least one of the pair of electrodes may increase with an increase in temperature.

Since the bending strength of the flexible resin is weakened generally with an increase in temperature, the pair of electrodes easily contacts each other by a weak pressure when the temperature of the environment where the seat device is disposed increases. Meanwhile, the resistance value of at least one of the facing electrodes increases with an increase in temperature. Accordingly, according to such a seat occupancy sensor, the electrodes easily contact each other with an increase in temperature, but a current may not easily flow to the contacting electrodes. In this way, the easiness of causing the electrodes to contact each other and the difficult current flow in the electrodes are offset to each other. Accordingly, it is possible to suppress a change in the pressure for turning on the pressure sensitive switch even when the temperature changes. In particular, since the temperature inside the automobile largely changes, the seat device is particularly useful for the automobile.

Further, the pressure sensitive switch may include a pair of flexible insulating sheets, a sheet-like spacer that is interposed between the pair of insulating sheets and is provided with at least one opening, a pair of electrodes that is provided on the respective surfaces of the pair of insulating sheets and faces each other through the opening, and a cushion member that is provided at the side opposite to the spacer in at least one of the pair of insulating sheets and covers at least a part of the opening through the insulating sheet.

According to such a pressure sensitive switch, when the pressure is applied to the cushion member, the cushion member is deformed so as to be crushed, and the insulating sheet is pressed by the elastic force. At this time, the cushion member presses the insulating sheet so that the insulating sheet enters the opening of the spacer, so that the pair of electrodes is electrically connected to each other so as to become an on state. Accordingly, even at the lower side of the cushion pad, the sitting of the person may be appropriately detected.

Further, the pressure sensitive switch may include a pair of flexible insulating sheets, a sheet-like spacer that is interposed between the pair of insulating sheets and is provided with at least one opening, and a pair of electrodes that is provided on the respective surfaces of the pair of insulating sheets and faces each other through the opening, and the spacer may be provided with the openings having at least two kinds of sizes.

The respective insulating sheets may not be easily warped as the opening interposed between the insulating sheets becomes smaller, so that the pair of electrodes facing each other through the opening may not be easily turned on. Incidentally, when the person sits on the cushion pad, there is a tendency that the pressure applied to the lower side of the cushion pad is not uniform. Accordingly, when a small opening is positioned at a place which is pressed by a large pressure, the electrodes may not be easily turned on at a place which receives a large pressure and may be easily turned on at a place which receives a small pressure. That is, a variation of the easiness of turning on the pair of electrodes and the pressure applied to the lower side of the cushion pad may be reduced by the size of the opening. As a result, even when the pressure applied to the lower side of the cushion pad is not uniform, the non-uniform pressure may be adjusted so that the sitting of the person may be further appropriately detected.

Further, a ratio in which the cushion member covers the opening may be different for each of different kinds of the openings.

In this way, when the ratio is set to be different, it is possible to adjust the easiness (the sensitivity of the switch) of turning on the pair of electrodes facing each other through the opening. Accordingly, even when there is a limitation in the arrangement place below the cushion pad, it is possible to improve the uniformity (balance) in which the switches are turned on.

Further, according to the invention, there is provided a method for disposing a seat occupancy sensor including at least one pressure sensitive switch in a seat device including a backrest, a cushion pad, and a support member for supporting the cushion pad, wherein the seat occupancy sensor is disposed while the pressure sensitive switch is positioned below the cushion pad and at the front side of a hip point of a person formally sitting on the seat device.

According to the method for disposing the seat occupancy sensor, since the seat occupancy sensor is disposed below the cushion pad, the discomfort caused by the seat occupancy sensor may be prevented. Moreover, since the pressure sensitive switch is disposed at the front side of the hip point of the person formally sitting on the seat device, the sitting of the person may be appropriately detected.

### Effect of the Invention

As described above, according to the invention, provided are the seat device capable of appropriately detecting the sitting of the person while preventing the discomfort caused by the seat occupancy sensor and the method for disposing the seat occupancy sensor used therein.

### Brief Description of the Drawings

FIG. 1 is a diagram illustrating a distribution of a load which is applied from a person to a cushion pad of a seat through a surface skin while the person formally sits on the seat.
FIG. 2 is a plan view illustrating a seat occupancy sensor which is used in a seat device according to a first embodiment of the invention.
FIG. 3 is a plan view illustrating a first electrode sheet illustrated in FIG. 1.
FIG. 4 is a plan view illustrating a second electrode sheet illustrated in FIG. 1.
FIG. 5 is a plan view illustrating a spacer.
FIG. 6 is a diagram illustrating a state of a cross-section taken along the line V-V of FIG. 1.
FIG. 7 is a circuit diagram illustrating a circuit configuration of the seat occupancy sensor illustrated in FIG. 1 by an equivalent circuit.
FIG. 8A is a diagram illustrating a state where the seat device provided with the seat occupancy sensor is viewed from the upside.
FIG. 8B is a diagram illustrating a state where the seat device provided with the seat occupancy sensor is viewed from the lateral side.
FIG. 9 is a conceptual diagram illustrating a state where a seat pan is viewed from the upside.
FIG. 10 is a conceptual diagram illustrating a distribution of a load which is applied from a person to the seat pan through a surface skin and a cushion pad while the person formally sits on the seat device.
FIG. 11 is a diagram illustrating a state where a pressure sensitive switch is turned on while the seat occupancy sensor is disposed inside the seat device from the same view point as that of FIG. 6.
FIG. 12 is a plan view illustrating a seat occupancy sensor which is used in a seat device according to a second embodiment of the invention.
FIG. 13 is a plan view illustrating a first electrode sheet illustrated in FIG. 12.
FIG. 14 is a plan view illustrating a second electrode sheet illustrated in FIG. 12.
FIG. 15 is a plan view illustrating a seat occupancy sensor according to a third embodiment of the invention.
FIG. 16A is a plan view illustrating a state where the pedestal is viewed from one side.
FIG. 16B is a diagram illustrating a cross-section taken along the line W-W of FIG. 16A.
FIG. 17A is a diagram illustrating a state where a seat device provided with the seat occupancy sensor is viewed from the upside.
FIG. 17B is a diagram illustrating a state where the seat device provided with the seat occupancy sensor is viewed from the lateral side.
FIG. 18 is a conceptual diagram illustrating a distribution of a load which is applied to a seat frame and a spring through a cushion pad when a person formally sits on the seat device of FIG. 17.
FIG. 19 is a diagram illustrating a state of a part of a seat device and a part of a seat occupancy sensor according to a fourth embodiment of the invention.
FIG. 20 is a diagram illustrating a seat occupancy sensor according to another embodiment.
FIG. 21 is a schematic diagram provided to describe a relation between an electrode and a cushion pad.

### Embodiment of the Invention

Hereinafter, preferred embodiments of a seat occupancy sensor according to the invention will be described in detail by referring to the drawings.

### (First embodiment)

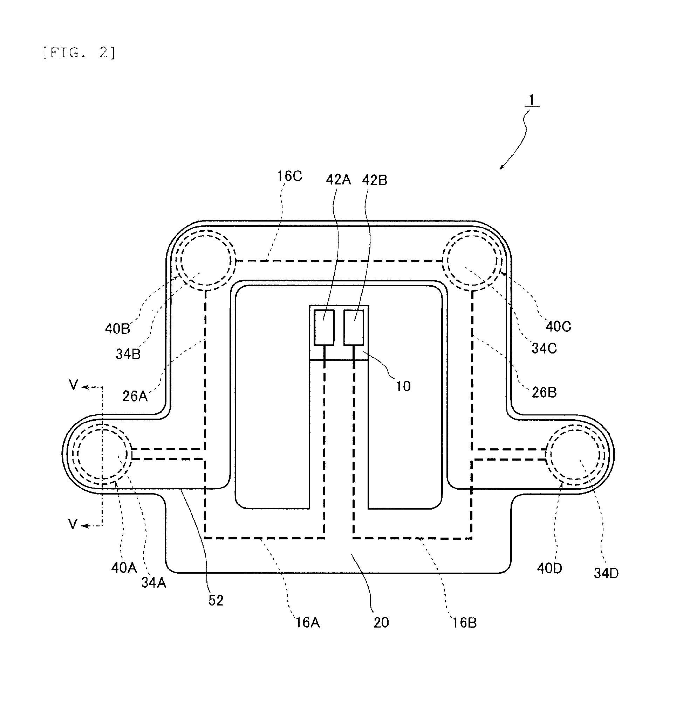

FIG. 2 is a plan view illustrating a seat occupancy sensor which is used in a seat device according to a first embodiment of the invention. As illustrated in FIG. 2, a seat occupancy sensor 1 mainly includes a first electrode sheet 10, a second electrode sheet 20 which overlaps the first electrode sheet 10, a spacer which is interposed between the first electrode sheet 10 and the second electrode sheet 20, a cushion member which is disposed at the opposite side of the spacer of the first electrode sheet 10, and a cushion member 52 which is disposed at the opposite side of the spacer of the second electrode sheet 20.

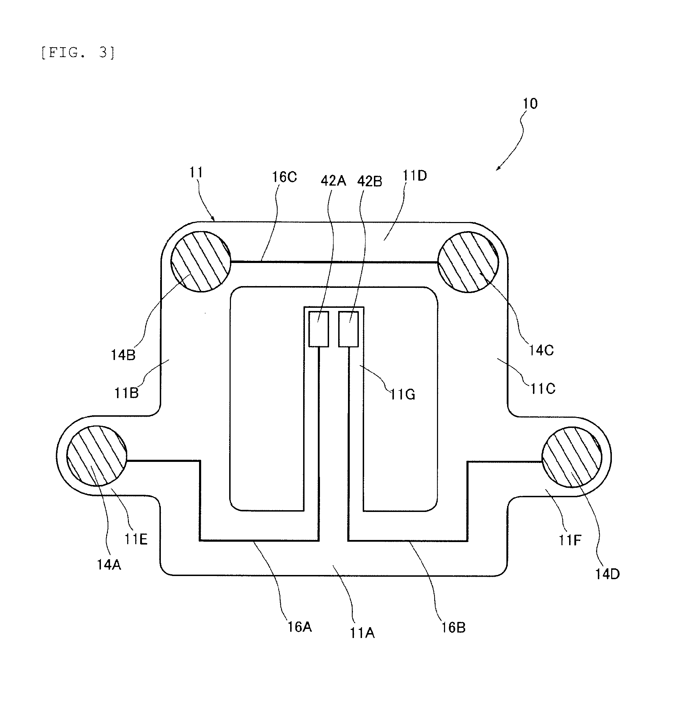

FIG. 3 is a plan view illustrating the first electrode sheet 10 illustrated in FIG. 2. As illustrated in FIG. 3, the first electrode sheet 10 mainly includes a first insulating sheet 11 which has flexibility and a film-like form, first electrodes 14A to 14D which are formed on the surface of the first insulating sheet 11, and terminals 42A and 42B which are formed on the surface of the first insulating sheet 11.

The first insulating sheet 11 includes a first portion 11A which has a band shape, a second portion 11B and a third portion 11C which extend in a direction perpendicular to the length direction of the first portion 11A, are congruent to each other, make a pair, and have a band shape, a fourth portion 11D which extends in a direction parallel to the length direction of the first portion 11A and has a band shape, a fifth portion 11E and a sixth portion 11F which extend in a direction parallel to the length direction of the first portion 11A, make a pair, and has a band shape, and a seventh portion 11G which extends in a direction perpendicular to the length direction of the first portion 11A, is shorter than the second portion 11B and the third portion 11C, and has a band shape. One end of the first portion 11A is connected to one end of the second portion 11B, and the other end of the first portion 11A is connected to one end of the third portion 11C. Further, the other end of the second portion 11B is connected to one end of the fourth portion 11D, and the other end of the third portion 11C is connected to the other end of the fourth portion 11D. In this way, the first portion 11A, the second portion 11B, the third portion 11C, and the fourth portion 11D substantially form a square shape, and a substantially square opening is formed by the portions 11A to 11D. Further, one end of the fifth portion 11E is connected to the outside of the opening in the middle of the second portion 11B, and the other end of the fifth portion 11E is formed as a free end at the outside of the opening. Furthermore, one end of the sixth portion 11F is connected to the outside of the opening in the middle of the third portion 11C, and the other end of the sixth portion 11F is formed as a free end at the outside of the opening. Further, one end of the seventh portion 11G is connected to the inside of the opening in the middle portion of the first portion 11A in the length direction, the other end of the seventh portion 11G is connected to nothing, and the other end is formed as a free end at the inside of the opening. With such a configuration, the first insulating sheet 11 passes through the center of the seventh portion 11G, and is formed in a symmetrical shape about the line taken along the length direction of the seventh portion 11G.

Each of the first electrodes 14A to 14D on the first insulating sheet 11 is substantially formed in a circular shape. Then, the first electrode 14A is provided on the fifth portion 11E with a predetermined gap from the free end side edge of one fifth portion 11E, and the first electrode 14D is provided on the sixth portion 11F with a predetermined gap from the free end side edge of the sixth portion 11F. Further, the first electrode 14B is provided on the second portion 11B in a place where the second portion 11B is connected to one end of the fourth portion 11D. Furthermore, the first electrode 14C is provided on the second portion 11B in a place where the third portion 11C is connected to the other end of the fourth portion 11D. In this way, the first electrodes 14A and 14B and the first electrodes 14D and 14C which are provided on the surface of the first insulating sheet 11 pass through the center of the seventh portion 11G and are provided so as to be axisymmetrical to each other about the line taken along the length direction of the seventh portion 11G.

Further, the terminals 42A and 42B substantially form a square shape, and the terminals 42A and 42B are provided in parallel along a direction perpendicular to the length direction of the seventh portion 11G at a position with a predetermined gap from the free end side edge of the surface of the seventh portion 11G.

Moreover, the first electrode 14A and the terminal 42A are electrically connected to each other by a first wire 16A. The first wire 16A extends in the length direction of the fifth portion 11E, and one end thereof is connected to the first electrode 14A and is bent perpendicularly at the connection point between the fifth portion 11E and the second portion 11B so as to further extend in the length direction of the second portion 11B. Then, the first wire 16A is bent perpendicularly again at the connection point between the second portion 11B and the first portion 11A so as to further extend in the length direction of the first portion 11A, and is bent perpendicularly again at the connection point between the first portion 11A and the seventh portion 11G so as to further extend in the length direction of the seventh portion 11G, and the other end thereof is connected to the terminal 42A. Further, the first electrode 14D and the terminal 42B are electrically connected to each other by a first wire 16B. The first wire 16B extends in the length direction of the sixth portion 11F, and one end thereof is connected to the first electrode 14D and is bent perpendicularly at the connection point between the sixth portion 11F and the third portion 11C so as to further extend in the length direction of the third portion 11C. Then, the first wire 16B is bent perpendicularly again at the connection point between the third portion 11C and the first portion 11A so as to further extend in the length direction of the first portion 11A and is bent perpendicularly again at the connection point between the first portion 11A and the seventh portion 11G so as to further extend in the length direction of the seventh portion 11G, and the other end thereof is connected to the terminal 42B. Furthermore, the first electrode 14B and the first electrode 14C are electrically connected to each other by a first wire 16C. The first wire 16C extends in the length direction of the fourth portion 11D, one end thereof is connected to the first electrode 14B, and the other end thereof is connected to the first electrode 14C.

In this way, as illustrated in FIG. 3, in the first electrode sheet 10, as described above, the first electrode 14B and the first electrode 14C are electrically connected to each other, and the first electrodes 14B and 14C, the first electrode 14A, and the first electrode 14D are insulated from one another.

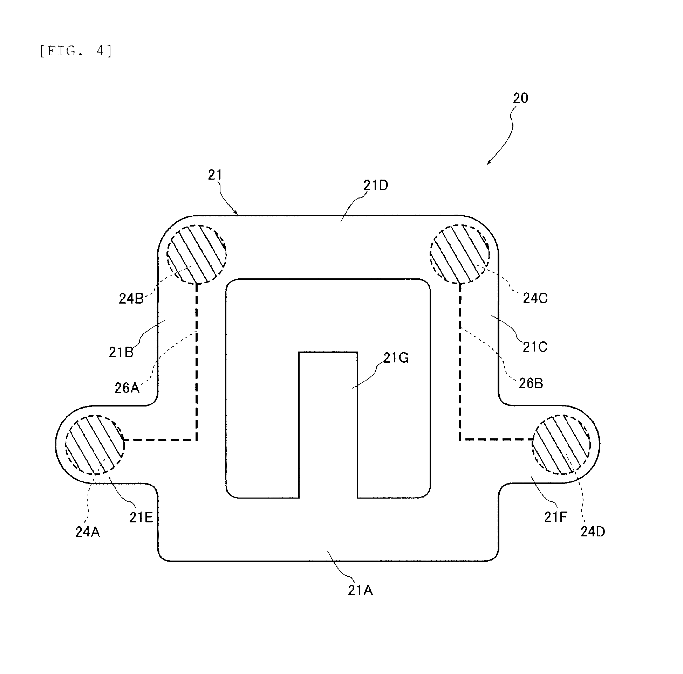

FIG. 4 is a plan view illustrating the second electrode sheet illustrated in FIG. 2. As illustrated in FIG. 4, the second electrode sheet 20 mainly includes a second insulating sheet 21 which has flexibility and a film-like form and second electrodes 24A to 24D which are formed on the surface of the second insulating sheet 21.

The second insulating sheet 21 includes a first portion 21A which has the same shape and size as those of the first portion 11A in the first insulating sheet 11, a second portion 21B and a third portion 21C which make a pair and have the same shape and size as those of the second portion 11B and the third portion 11C which make a pair in the first insulating sheet 11, a fourth portion 21D which has the same shape and size as those of the fourth portion 11D in the first insulating sheet 11, a fifth portion 21E and a sixth portion 21F which make a pair and have the same shape and size as those of the fifth portion 11E and the sixth portion 11F which make a pair in the first insulating sheet 11, and a seventh portion 21G which has a shape of which the width is equal to that of the seventh portion 11G of the first insulating sheet 11 and the length is shorter than that of the seventh portion. Then, the first portion 21A, the second portion 21B, the third portion 21C, the fourth portion 21D, the fifth portion 21E, and the sixth portion 21F are respectively connected so as to completely overlap the first portion 11A, the second portion 11B, the third portion 11C, the fourth portion 11D, the fifth portion 11E, and the sixth portion 11F of the first insulating sheet 11 when the first electrode sheet 10 overlap the second electrode sheet 20. Further, the seventh portion 21G of the second insulating sheet 21 overlaps the seventh portion 11G of the first electrode sheet when the first electrode sheet 10 overlaps the second electrode sheet 20, and is connected to the first portion 21A so that the terminals 42A and 42B of the first electrode sheet 10 are exposed. Furthermore, in the embodiment, the second insulating sheet 21 and the first insulating sheet 11 have the same flexibility, and are adapted to be warped by the same amount when the same force is applied thereto.

Further, the second electrodes 24A to 24D have the same shape and size as those of the first electrodes 14A to 14D. Furthermore, the second electrodes 24A to 24D are respectively provided at positions where the second electrodes completely overlap the first electrodes 14A to 14D at the surface of the first electrode sheet 10 of the second insulating sheet 21 when the second electrode sheet 20 overlaps the first electrode sheet 10.

Moreover, the second electrode 24A and the second electrode 24B are electrically connected to each other by a second wire 26A. The second wire 26A extends in the length direction of the fifth portion 21E, one end thereof is connected to the second electrode 24A, is bent perpendicularly at the connection point between the fifth portion 21E and the second portion 21B so as to further extend in the length direction of the second portion 21B, and the other end thereof is connected to the second electrode 24B. Further, the second electrode 24D and the second electrode 24C are electrically connected to each other by a second wire 26B. The second wire 26B extends in the length direction of the sixth portion 21F, one end thereof is connected to the second electrode 24D, is bent perpendicularly at the connection point between the sixth portion 21F and the third portion 21C so as to further extend in the length direction of the third portion 21C, and the other end thereof is connected to the second electrode 24C.

In this way, as illustrated in FIG. 4, in the second electrode sheet 20, as described above, the second electrode 24A and the second electrode 24B are electrically connected to each other, the second electrode 24D and the second electrode 24C are electrically connected to each other, and the second electrodes 24A and 24B and the second electrodes 24D and 24C are insulated from each other.

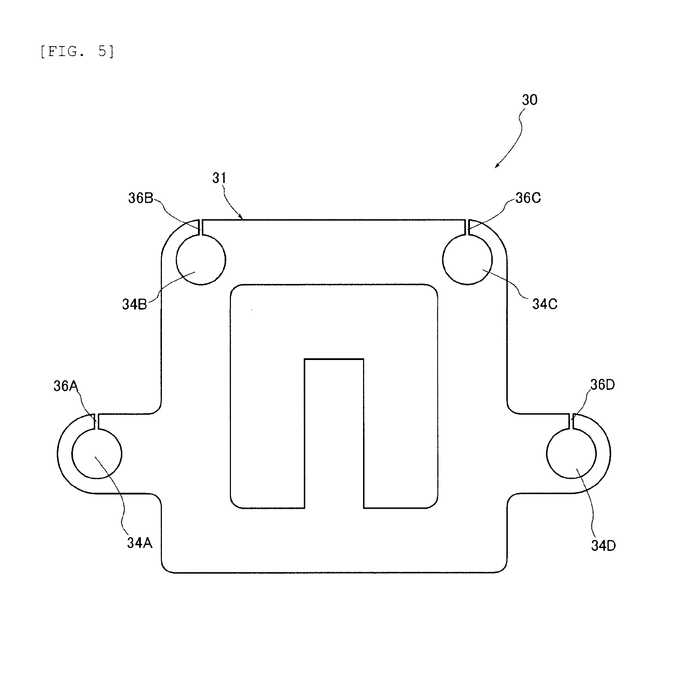

FIG. 5 is a plan view illustrating a spacer which is interposed between the first electrode sheet 10 and the second electrode sheet 20. A spacer 30 is formed as a flexible insulating sheet. Then, as illustrated in FIG. 5, the outer shape of the spacer 30 matches the outer shape of the second electrode sheet 20.

Further, the spacer 30 is provided with openings 34A to 34D which are formed in the same size. The circumferential edges of the openings 34A to 34D are substantially formed in a circular shape, and the diameters thereof are slightly smaller than those of the first electrodes 14A to 14D. Then, the openings 34A to 34D are provided at positions where the respective openings 34A to 34D enter the respective outer peripheries of the first electrodes 14A to 14D when the spacer 30 overlap the first electrode sheet 10 and is viewed in a direction perpendicular to the spacer 30.

Moreover, the spacer 30 is provided with slits 36A to 36D which are air releasing slits and spatially connect the openings 34A to 34D to the outside of the spacer 30. Specifically, in each of the slits 36A to 36D, one end is connected to the outside of the spacer 30. Then, the other end of the slit 36A is connected to the opening 34A, the other end of the slit 36B is connected to the opening 34B, the other end of the slit 36C is connected to the opening 34C, and the other end of the slit 36D is connected to the opening 34D.

Furthermore, an adhesive (not illustrated) is applied on both surfaces of the spacer 30 so that both surfaces are bonded to the first electrode sheet 10 and the second electrode sheet 20.

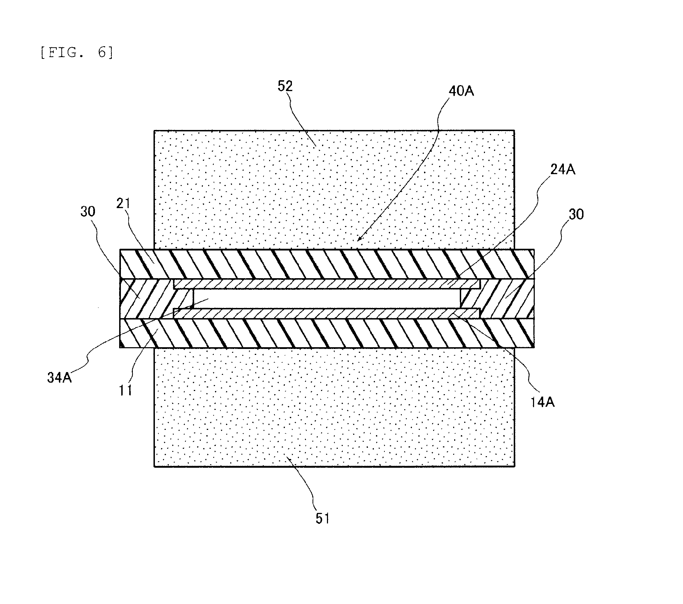

FIG. 6 is a diagram illustrating a state of a cross-section taken along the line V-V illustrated in FIG. 2. As illustrated in FIGS. 2 and 6, in the seat occupancy sensor 1, the first electrode sheet 10 overlaps the second electrode sheet 20 with the spacer 30 interposed therebetween, and are integrated by being fixed through the adhesive applied on both surfaces of the spacer 30.

When the seat occupancy sensor 1 is viewed in a direction perpendicular to the seat occupancy sensor 1 while the first electrode sheet 10, the spacer 30, and the second electrode sheet 20 are integrated with each other in this way, as illustrated in FIG. 2, the first electrode 14A of the first electrode sheet 10 and the second electrode 24A of the second electrode sheet 20 overlap each other, and the opening 34A formed in the spacer 30 enters the outer periphery of the second electrode 24A. Then, the first electrode 14A and the second electrode 24A face each other with a predetermined gap therebetween by the spacer 30 as illustrated in FIG. 6. In this way, a pressure sensitive switch 40A is configured by the first and second insulating sheets 11 and 21, the sheet-like spacer 30 provided with the opening 34A, and the pair of electrodes 14A and 24A facing each other through the opening 34A. Similarly, the pressure sensitive switches 40B to 40D are configured as illustrated in FIG. 2 in a manner such that the other first electrodes 14B to 14D and the other second electrodes 24B to 24D face each other with a predetermined gap therebetween at the openings 34B to 34D of the spacer 30.

Further, as illustrated in FIGS. 2 and 6, the cushion member 52 which has an elastic force and is deformed so as to be crushed when a pressure is applied thereto is provided at the opposite side of the spacer 30 of the second insulating sheet 21. The cushion member 52 is disposed on the second insulating sheet 21 so that one end side covers the pressure sensitive switch 40A. Then, the cushion member 52 extends in the length direction of the fifth portion 21E of the second insulating sheet 21, and is bent perpendicularly so as to extend in the length direction of the second portion 21B in a place where the fifth portion 21E of the second insulating sheet 21 is connected to one second portion 21B. Moreover, the cushion member 52 covers the pressure sensitive switch 40B and is bent perpendicularly so as to extend in the length direction of the fourth portion 21D in a place where the second portion 21B of the second insulating sheet 21 is connected to the fourth portion 21D. Then, the cushion member 52 covers the pressure sensitive switch 40C and is bent perpendicularly so as to extend in the length direction of the third portion 21C in a place where the fourth portion 21D of the second insulating sheet 21 is connected to the other third portion 21C. Then, the cushion member 52 is bent perpendicularly so as to extend in the length direction of the sixth portion 21F in a place where the third portion 21C of the second insulating sheet 21 is connected to the sixth portion 21F, and covers the pressure sensitive switch 40D at the other end side of the cushion member 52. In this way, the cushion member 52 covers the pressure sensitive switches 40A to 40D.

Further, as illustrated in FIG. 6, a cushion member 51 is provided at the opposite side of the spacer 30 of the first insulating sheet 11. The cushion member 51 has the same shape as that of the cushion member 52, and the outer shape thereof overlaps the outer shape of the cushion member 52 when viewed in a direction perpendicular to the first insulating sheet 11. Accordingly, the cushion member 51 covers the pressure sensitive switches 40A to 40D at the opposite side of the spacer 30 of the first insulating sheet 11.

Furthermore, in the embodiment, the sum of the crushed thicknesses of the pair of cushion members 51 and 52 is set to be equal to or larger than the distance between the facing electrodes in the respective pressure sensitive switches 40A to 40D. Further, the cushion members 51 and 52 are formed with the same thickness, and the respective cushion members 51 and 52 have the same material and the same elastic force. Then, the respective cushion members are adapted to be crushed by the same amount when the same pressure is applied thereto. Accordingly, the seat occupancy sensor 1 may have the same sitting detection sensitivity even when any one of the first electrode sheet 10 and the second electrode sheet 20 is disposed at the upper position.

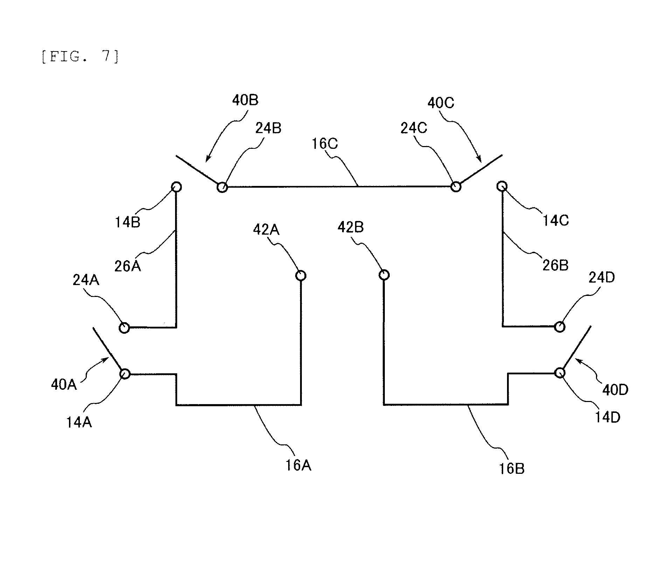

FIG. 7 is a circuit diagram illustrating a circuit configuration of the seat occupancy sensor 1 illustrated in FIG. 2 by an equivalent circuit. As illustrated in FIG. 7, the pressure sensitive switches 40A to 40D and the terminals 42A and 42B which have the above-described configuration are connected to one another by the first wires 16A to 16C formed on the surface of the first insulating sheet 11 and the second wires 26A and 26B formed on the surface of the second insulating sheet 21. When the respective pressure sensitive switches 40A to 40D are connected to one another in this way, the circuit of the seat occupancy sensor 1 is configured. Then, the terminal 42A, the pressure sensitive switch 40A, the pressure sensitive switch 40B, the pressure sensitive switch 40C, the pressure sensitive switch 40D, and the terminal 42B are connected to one another in series in this order.

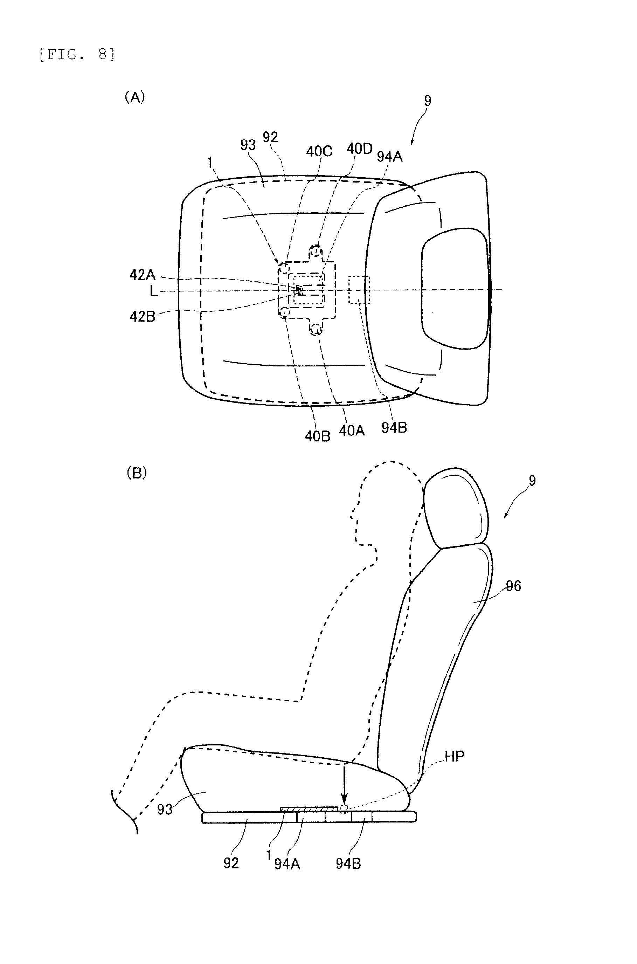

FIG. 8 is a diagram illustrating a state of the seat device according to the embodiment of the invention. Specifically, FIG. 8A is a diagram illustrating a state where the seat device 9 provided with the seat occupancy sensor 1 is viewed from the upside, and FIG. 8B is a diagram illustrating a state where the seat device 9 provided with the seat occupancy sensor 1 is viewed from the lateral side. As illustrated in FIGS. 8A and 8B, the seat device 9 mainly includes a seat pan 92, a cushion pad 93 which is disposed on the seat pan 92, a backrest 96, and the seat occupancy sensor 1 which is disposed on the seat pan 92 and is interposed between the seat pan 92 and the cushion pad 93, and the seat device 9 is formed as, for example, the vehicle seat device.

The seat pan 92 is a support member that is disposed below the cushion pad 93 and supports the cushion pad 93, and is formed as a placement member that places the seat occupancy sensor thereon in the embodiment. The seat pan 92 of the embodiment is formed by bending a metal plate with high rigidity, and has an axisymmetrical shape about the center line (the line of the vertical plane passing through the center in the width direction of the cushion pad 93) L which is parallel to the front to rear direction of the cushion pad 93 and passes through the center in the width direction as illustrated in FIG. 8A. Further, a substantially square hole 94A is substantially formed at the center of the seat pan 92, and a substantially square hole 94B is formed at the rear side of the hole 94A. As illustrated in FIG. 8B, the hole 94A is formed at the front side of a hip point HP while a person formally sits on the seat device 9, and the hole 94B is formed at the slightly rear side of the hip point HP.

Then, the cushion pad 93 is held by the seat pan 92. The cushion pad 93 is formed of foamed urethane with a cushion property. Accordingly, the cushion pad 93 has an elastic force and is deformed so as to be crushed when a pressure is applied thereto. Further, the cushion pad 93 is coated with a surface skin of a cloth (not illustrated).

The backrest 96 is connected to the seat pan 92 by a member (not illustrated) at the rear side of the cushion pad 93 so as to contact the cushion pad 93.

As illustrated in FIG. 8B, the seat occupancy sensor 1 is disposed below the cushion pad 93 so as to receive the pressure from the cushion pad 93. Specifically, the seat occupancy sensor 1 is disposed on the seat pan 92 of the seat device 9, and is interposed between the seat pan 92 and the cushion pad 93. Further, in a state where the seat occupancy sensor 1 is disposed in this way, the second insulating sheet 21 is disposed near the cushion pad 93, the cushion member 52 is interposed between the cushion pad 93 and the second insulating sheet 21, the first insulating sheet 11 is disposed near the seat pan 92, and the cushion member 51 is interposed between the seat pan 92 and the first insulating sheet 11. Moreover, as illustrated in FIG. 8A, the seat occupancy sensor 1 is disposed so that the hole 94A of the seat pan 92 is disposed inside the opening of the seat occupancy sensor 1. Then, the pressure sensitive switches 40A and 40D are disposed along the width direction of the cushion pad 93 at the left and right sides about the center line L, are symmetrical to each other about the center line L, and interpose the hole 94A. Further, the pressure sensitive switches 40B and 40C are disposed along the width direction at the left and right sides about the center line L at the front side of the hole 94A, and are symmetrical to each other about the center line L. Since the hole 94A is formed at the front side of the hip point HP as described above, the seat occupancy sensor 1 is disposed so that the respective pressure sensitive switches 40A to 40D are disposed at the front side of the hip point HP of the person who formally sits on the seat pan 92.

Furthermore, the terminals 42A and 42B are derived from the hole 94A to the lower side of the seat pan 92, and are electrically connected to a power supply and a measurement unit (not illustrated) at the outside.

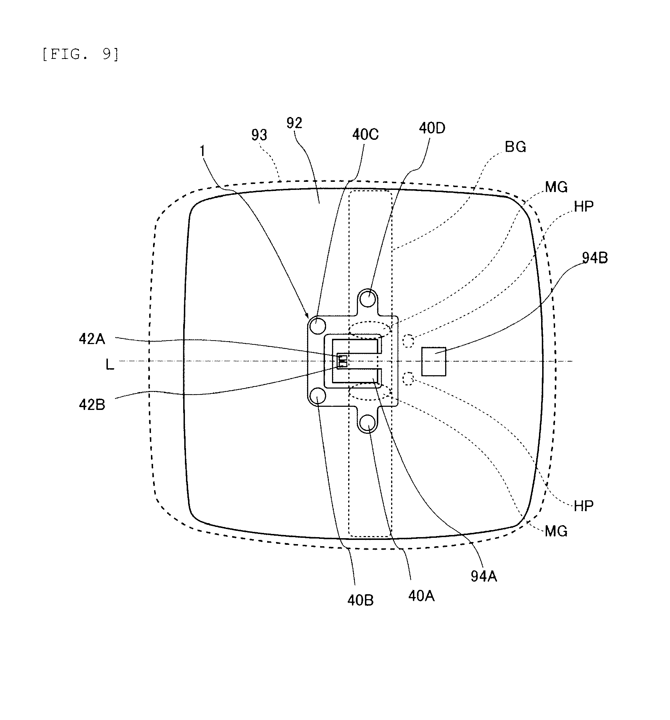

FIG. 9 is a conceptual diagram illustrating a state where the seat pan 92 is viewed from the upside. MG in FIG. 9 indicates a maximum load region, and is a region which is measured in advance so as to match the seat device. The maximum load region MG is formed as a region at the front side of the hip point HP, and in the embodiment, the maximum load region MG is formed as a region adjacent to the hole 94A in the lateral direction. The reason why the maximum load region MG is formed at the front side of the hip point HP is as below. That is, when a person formally sits on the seat device 9 with the backrest 96, the back of the person contacts the backrest 96, and the back is pressed by the backrest 96, so that the force applied to the back presses the hip of the person forward. Accordingly, the hip of the sitting person presses the cushion pad 93 in the vertical direction by the gravity, and presses the cushion pad 93 forward by the force from the back. In this way, the pressure which is applied from the cushion pad 93 to the seat pan 92 increases at the front side of the hip point HP of the person who formally sits on the cushion pad compared to the other portions. Then, when the person formally sits on the cushion pad, the person substantially sits on the center of the cushion pad in the width direction. Accordingly, there is a tendency that a large pressure is applied to the vicinity of the center of the cushion pad 93 in the width direction, that is, the vicinity of the center line L. For this reason, a large pressure applied to a region adjacent to the hole 94A formed at the center of the cushion pad 93 in the width direction at the front side of the hip point HP compared to a region adjacent to the other hole. Further, since the force applied to the back presses the hip of the person forward as described above, the force applied to the seat pan is widened forward. Further, when the person formally sits on the seat device 9 as described above, the person sits so as to be bilaterally symmetric about the substantial center of the cushion pad 93 in the width direction, and the pelvis of the person is bilaterally symmetric in the left to right direction about the center line L. For this reason, the pressure which is applied from the cushion pad 93 to the seat pan 92 is substantially symmetrical about the center line L and is widened in the width direction. Furthermore, in FIG. 9, a band-like region in which the maximum load region MG of the seat pan 92 extends in the width direction of the cushion pad 93 is indicated by BG.

Then, as described above, the pressure sensitive switches 40A and 40D of the seat occupancy sensor 1 are disposed in the width direction of the seat pan 92 with the hole 94A interposed therebetween, the pressure sensitive switches 40B and 40C are disposed at the front side of the hole 94A, the pressure sensitive switches 40A and 40D are disposed at positions where the pressure sensitive switches overlap the band-like region BG, and the pressure sensitive switches 40B and 40C are disposed at the front side of the band-like region BG. Accordingly, the pressure sensitive switches 40A to 40D are disposed at the front side of the band-like region BG. At this time, since the distance between the pressure sensitive switch 40A and the pressure sensitive switch 40D is longer than the distance between the pressure sensitive switch 40B and the pressure sensitive switch 40C, the pressure sensitive switch close to the band-like region BG is disposed at a position far from the center line L.

Next, an operation of the seat occupancy sensor 1 of the seat device 9 will be described.

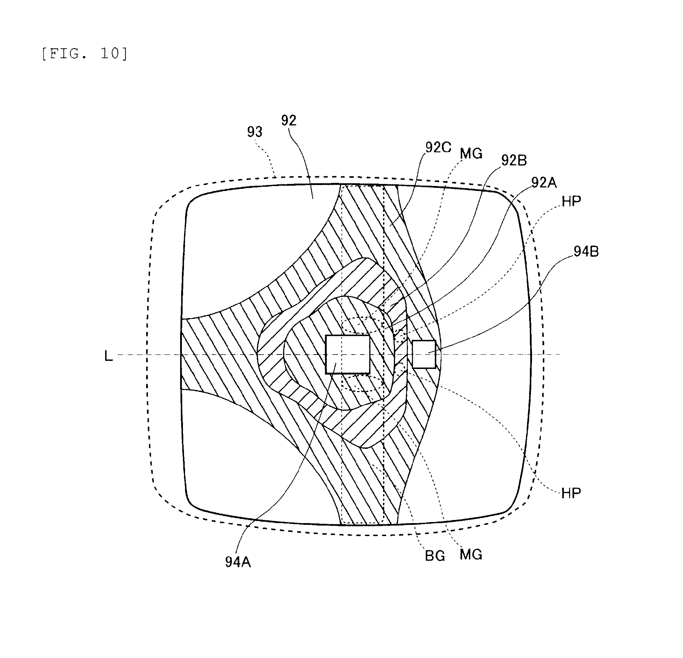

FIG. 10 is a conceptual diagram illustrating a distribution of a load which is applied from the person to the seat pan 92 of the seat device 9 through the surface skin and the cushion pad 93 while the person formally sits on the seat device 9 as in FIG. 1. As illustrated in FIG. 10, a region 92A which is adjacent to the hole 94A formed in the seat pan 92 receives the largest pressure from the cushion pad 93, a region 92B which is disposed at the outside of the region 92A receives the pressure which is large at the next place, and a region 92C which is disposed at the outside of the region 92B receives the pressure which is large at the next place. In the seat device 9, the pressure which is applied from the cushion pad 93 to the seat pan 92 by the load of the person is widely distributed on the seat pan 92. As described above, the pressure is the largest near the region 94A, and is widened toward the front side of the hole 94A and in the width direction. Further, in the vicinity of the hole 94B which is formed at the rear side of the hip point HP, the pressure which is applied from the cushion pad 93 to the seat pan 92 is smaller than that of the periphery of the hole 94A.

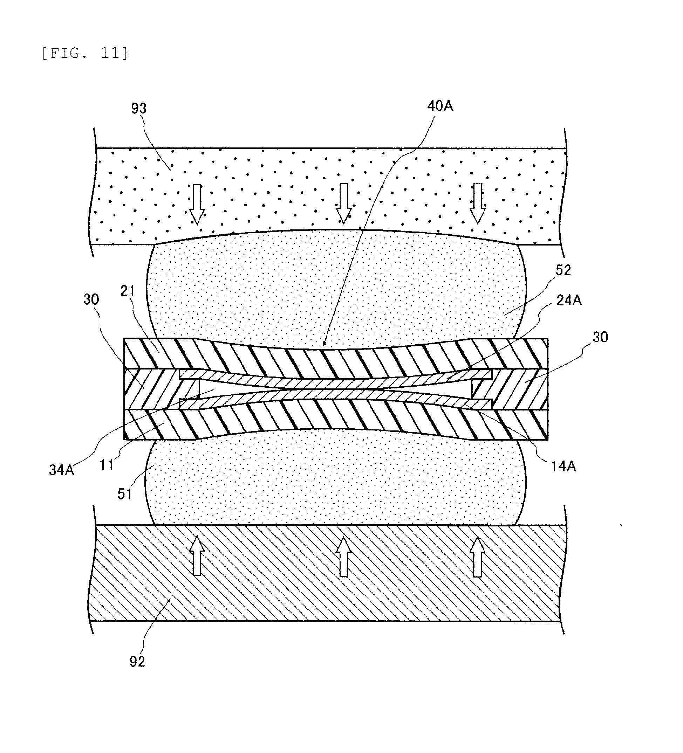

FIG. 11 is a diagram illustrating a state where the pressure sensitive switch 40A is turned on while the seat occupancy sensor 1 is disposed inside the seat device 9 from the viewpoint as that of FIG. 6. Furthermore, in FIG. 11, only a part of the seat pan 92 and the cushion pad 93 are illustrated for convenience of description.

As described above, the pressure sensitive switch 40A is disposed at a position where the pressure sensitive switch overlaps the band-like region BG passing through the maximum load region MG. Accordingly, when the person sits on the seat device 9, the pressure sensitive switch 40A is appropriately pressed as indicated by the arrow by the seat pan 92 and the cushion pad 93 in a direction perpendicular to both surfaces of the seat occupancy sensor 1 as illustrated in FIG. 11. That is, the cushion member 52 receives the pressure from the cushion pad 93 of the seat, and the cushion member 51 receives the pressure from the seat pan 92. At this time, the cushion members 51 and 52 are deformed so as to be crushed by the pressures. Then, the first insulating sheet 11 and the second insulating sheet 21 receive the pressures from the cushion members 51 and 52 by the elastic forces of the cushion members 51 and 52, and are warped so as to enter the opening 34A of the spacer 30. For this reason, the electrodes 14A and 24A which are provided in the insulating sheets 11 and 21 facing each other through the opening 34A of the spacer 30 contact each other. In this way, the pressure sensitive switch 40A is turned on.

Then, as in the pressure sensitive switch 40A, even the pressure sensitive switch 40D which is disposed at a position symmetrical to the pressure sensitive switch 40A about the center line L is turned on in a manner such that the first insulating sheet 11 and the second insulating sheet 21 are pressed and warped by the elastic forces of the cushion members 51 and 52. Further, as described above, when the person formally sits on the seat device 9, the pressure which is applied from the cushion pad 93 to the seat pan 92 by the load of the person is widely distributed on the seat pan 92. Then, as illustrated in FIG. 10, the seat pan 92 is pressed by the cushion pad 93 even at the front side of the band-like region BG. For this reason, as in the pressure sensitive switch 40A, even the pressure sensitive switches 40B and 40C are turned on in a manner such that the first insulating sheet 11 and the second insulating sheet 21 are pressed and warped by the elastic forces of the cushion members 51 and 52.

Then, as described above, since the pressure sensitive switches 40A to 40D are connected in series to one another, the terminal 42A and the terminal 42B are electrically connected to each other when the pressure sensitive switches 40A to 40D are all turned on. In this way, when a measurement unit (not illustrated) detects a detection signal generated by the seat occupancy sensor 1, the sitting of the person is detected.

Furthermore, since the pressure sensitive switches 40A and 40D which are disposed at the positions overlapping the band-like region BG of the seat pan 92 are away from the center line L of FIG. 9 compared to the pressure sensitive switches 40B and 40C which are disposed at the front side away from the band-like region BG, a difference between the pressure applied to the pressure sensitive switches 40A and 40D and the pressure applied to the pressure sensitive switches 40B and 40C is suppressed in the seat device 9.

Further, in the seat occupancy sensor 1 of the embodiment, as described above, the sum of the crushed thicknesses of the cushion members 51 and 52 is set to be equal to or larger than the distance between the electrodes 14A to 14D and the electrodes 24A to 24D. Accordingly, since the pressure sensitive switches 40A to 40D may be turned on only by the crushing of the cushion members 51 and 52 instead of warping, the sitting may be appropriately detected.

Further, the same pressure is substantially applied from the seat pan 92 and the cushion pad 93 to the seat occupancy sensor 1. Accordingly, the pressure which is applied from the seat pan 92 to the cushion member 51 is substantially equal to the pressure which is applied from the cushion pad 93 to the cushion member 52. Then, in the embodiment, as described above, since the cushion members 51 and 52 have the same elastic force, the cushion members 51 and 52 press the insulating sheets 11 and 21 by the same elastic force when the same pressure is applied thereto. Accordingly, the insulating sheets 11 and 21 are warped by the same amount, and the electrodes 14A to 14D and 24A to 24D which respectively make a pair in the respective pressure sensitive switches 40A to 40D contact each other at the substantially center in the thickness direction of the spacer 30 inside the openings 34A to 34D. For this reason, it is possible to suppress an increase in the warping amount of one insulating sheet, and hence to improve the sitting detection sensitivity.

Further, when the first insulating sheet 11 and the second insulating sheet 21 are warped, the air inside the respective openings 34A to 34D is discharged to the outside through the slits 36A to 36D. Accordingly, when the respective pressure sensitive switches 40A to 40D are turned on, the first insulating sheet 11 and the second insulating sheet may be appropriately warped, and the pair of electrodes of the respective pressure sensitive switches 40A to 40D may easily contact each other.

As described above, according to the seat device 9 of the embodiment, since the seat occupancy sensor 1 is disposed on the seat pan 92, the discomfort caused by the seat occupancy sensor 1 may be prevented. Further, the pressure which is applied from the cushion pad 93 to the seat pan 92 when the person formally sits on the seat device 9 including the backrest 96 so that the load is applied to the cushion pad 93 is large at the front side of the hip point HP of the person who formally sits on the seat device compared to the other portions. Accordingly, according to the seat device 9 of the embodiment, since the pressure sensitive switches 40A to 40D are disposed at the front side of the hip point HP of the person who formally sits on the seat device, the sitting of the person may be appropriately detected. Then, according to the method for disposing the seat occupancy sensor 1 used in the seat device 9, since the seat occupancy sensor 1 is disposed on the seat pan 92, it is possible to prevent the discomfort caused by the seat occupancy sensor 1. Moreover, since the pressure sensitive switches 40A to 40D are disposed at the front side of the hip point HP of the person who formally sits on the seat device, the sitting of the person may be appropriately detected.

Further, according to the knowledge of the inventor, a baggage which has a weight approximately equal to the weight of the person turning on the pressure sensitive switches 40A to 40D is accommodated in a box in many cases. Then, in a case where such a box-like baggage with such a weight is placed on the seat, the baggage is generally inclined in accordance with the shape of the seat device 9, and hence the cushion pad 93 receives the largest load from the ridge portion of the box. For this reason, there is a tendency that the pressure which is applied from the cushion pad 93 to the seat pan 92 by the load of the box-like baggage is widened in a linear shape. However, according to the seat occupancy sensor of the embodiment, the pressure sensitive switch 40B and the pressure sensitive switch 40C are disposed so as not to overlap the line passing through the pressure sensitive switch 40A and the pressure sensitive switch 40D, and the pressure sensitive switches 40A to 40D are disposed so as to be distributed on the seat pan 92 instead of the parallel arrangement along one linear shape. For this reason, according to the seat device 9 in which the seat occupancy sensor 1 is disposed on the seat pan 92, it is possible to prevent all the pressure sensitive switches 40A to 40D from being turned on even when the baggage with such a weight is placed on the seat device 9. Then, since all the pressure sensitive switches 40A to 40D are electrically connected in series to one another, it is possible to prevent the arrangement of the baggage from being erroneously detected as the sitting of the person even when a part of the pressure sensitive switches are turned on.

Moreover, as described above, in a case where the person sits on the seat device, the person generally sits on the substantial center of the cushion pad in the width direction, and the left and right pelvises of the person press the cushion pad 93 at the left and right sides of the center line L. Meanwhile, it is difficult to mention that the baggage is always placed on the center of the cushion pad 93 in the width direction. Accordingly, there is a tendency that the pressure applied from the cushion pad 93 to the seat pan 92 is not substantially symmetrical about the center line L in a case where the load is placed on the seat device 9. Then, the seat occupancy sensor 1 may appropriately detect the sitting of the person and may prevent the erroneous detection of the baggage since the pressure sensitive switches 40A and 40B and the pressure sensitive switches 40D and 40C are disposed at the left and right sides about the center line L. Moreover, in the embodiment, since the pressure sensitive switches 40A and 40D and the pressure sensitive switches 40B and 40C are arranged along the width direction of the cushion pad, the sitting of the person may be further appropriately detected. Moreover, in the seat device 9 of the embodiment, the pressure sensitive switch 40A and the pressure sensitive switch 40D are arranged at the bilaterally symmetrical positions about the center line L, and the pressure sensitive switch 40B and the pressure sensitive switch 40C are arranged at the bilaterally symmetrical positions. For this reason, the sitting of the person may be further appropriately detected.

Incidentally, in the seat occupancy sensor 1 of the embodiment, the cushion member 51 is provided on the opposite surface to the surface near the spacer 30 in the insulating sheet 11, and the cushion member 52 is provided on the opposite surface to the surface near the spacer 30 in the insulating sheet 21. When a load caused by the sitting is applied to the cushion members 51 and 52, the respective cushion members 51 and 52 are deformed so as to be crushed by the load, and appropriately warp the respective insulating sheets 11 and 21 by the elastic forces so that the respective insulating sheets enter the opening 34A of the spacer 30. Accordingly, the sitting may be appropriately detected even when the seat occupancy sensor 1 is disposed on the seat pan 92 which is not deformed by the load. Furthermore, the respective cushion members 51 and 52 have a property in which the respective cushion members may be freely deformed in accordance with the situation. For this reason, the respective cushion members 51 and 52 may appropriately warp the insulating sheets 11 and 21 in response to the load caused by the sitting as in the seat pan 92 even when the seat occupancy sensor is disposed on an object deformed by a load. Accordingly, the respective cushion members 51 and 52 may prevent a problem in which the sitting detection load differs in response to the place where the seat occupancy sensor is disposed.

In addition, since the cushion member 51 or 52 has a property in which the cushion member may be freely changed in accordance with the situation, the respective insulating sheets 11 and 21 may be appropriately warped even when a gap is formed between the cushion member 51 or 52 and the member facing the cushion member 51 or 52. Further, since the cushion member 51 which is disposed between the seat pan 92 and the first insulating sheet 11 adjusts the heights of the pressure sensitive switches 40A to 40D from the seat pan 92 and the cushion member 52 adjusts the height from the second insulating sheet to the cushion pad 93, it is possible to prevent a noticeable increase in the load for turning on the pressure sensitive switch even when a gap is formed between the seat pan 92 and the cushion pad 93.

Next, a material forming the seat occupancy sensor 1 will be described.

The insulating sheet 11 of the first electrode sheet 10, the insulating sheet 21 of the second electrode sheet 20, and the spacer 30 are formed of a flexible insulating resin. As such a resin, polyethylene terephthalate (PET), polyethylene naphthalate (PEN), polyimide (PI), and the like may be exemplified. Among these, PEN is preferredpreferred from the viewpoint of excellent heat resistance.

Further, as the adhesive applied on both surfaces of the spacer 30, an acrylic adhesive is preferred. For example, an adhesive may be exemplified that uses a base in which an acrylic polymer uses one or two or more of (meth)acrylic alkyl ester as a monomeric component.

Further, the first electrodes 14A to 14D, the second electrodes 24A to 24D, the first wires 16A to 16C, the second wires 26A and 26B, and the terminals 42A and 42B are formed of a conductive paste or a metal foil formed by plating. A part of these components may be formed of the conductive paste, and the other portions may be formed of the metal foil formed by plating. As the conductive paste, various metal pastes such as a silver paste or a carbon paste may be exemplified. Further, as the metal foil formed by plating, copper, nickel, or a laminated structure thereof may be exemplified.

In particular, it is preferred that at least one of the first electrodes 14A to 14D and the second electrodes 24A to 24D be formed of a material of which a resistance value increases with an increase in temperature. A resin which has flexibility like the first insulating sheet 11 and the second insulating sheet 21 generally may be easily warped with an increase in temperature, and when the temperature of the environment in which the seat device 9 is disposed increases, the first electrodes 14A to 14D may easily contact the second electrodes 24A to 24D with a weak pressure. In this case, when at least one of the first electrodes 14A to 14D and the second electrodes 24A to 24D is an electrode of which a resistance value increases with an increase in temperature as described above, the first insulating sheet 11 and the second insulating sheet 21 may be easily warped with an increase in temperature, and the first electrodes 14A to 14D may easily contact the second electrodes 24A to 24D. However, a current may not easily flow to the contacting electrodes. Accordingly, the easiness of causing the electrodes to contact each other and the difficult flow of the current flowing to the electrodes are offset to each other. Accordingly, even when the environment temperature of the seat device 9 changes, it is possible to suppress a change in pressure for turning on the pressure sensitive switches 40A to 40D. Particularly, when the seat device 9 is mounted on the automobile, the temperature inside the vehicle largely changes. Then, since the seat pan 92 generally has a metallic property, heat may be easily transferred to the seat occupancy sensor 1. Accordingly, as described above, when at least one of the first electrodes 14A to 14D and the second electrodes 24A to 24D is formed of a material of which a resistance value increases with an increase in temperature, it is possible to appropriately detect the sitting of the person even when the temperature inside the vehicle changes. Accordingly, the seat device 9 is particularly useful for the automobile. As such an electrode, a double-structure electrode may be exemplified in which a carbon paste is applied on a silver paste.

Further, the cushion members 51 and 52 are members that have an elastic force and are deformed so as to be crushed as described above. The material forming such members is not particularly limited. However, as the material of the cushion members 51 and 52, a sponge-like resin with a plurality of void holes, a non-woven cloth formed by entangling resinous fibers with an elastic force, rubber, or the like may be exemplified. As such a resin, a resin may be exemplified which includes at least one of silicon and polyester. Since such a resin changes by a little amount in elastic force with a change in temperature, a change in sitting detection load may be desirably suppressed even when the seat occupancy sensor 1 is disposed in a place such as an automobile in which the environment temperature largely changes.

### (Second embodiment)

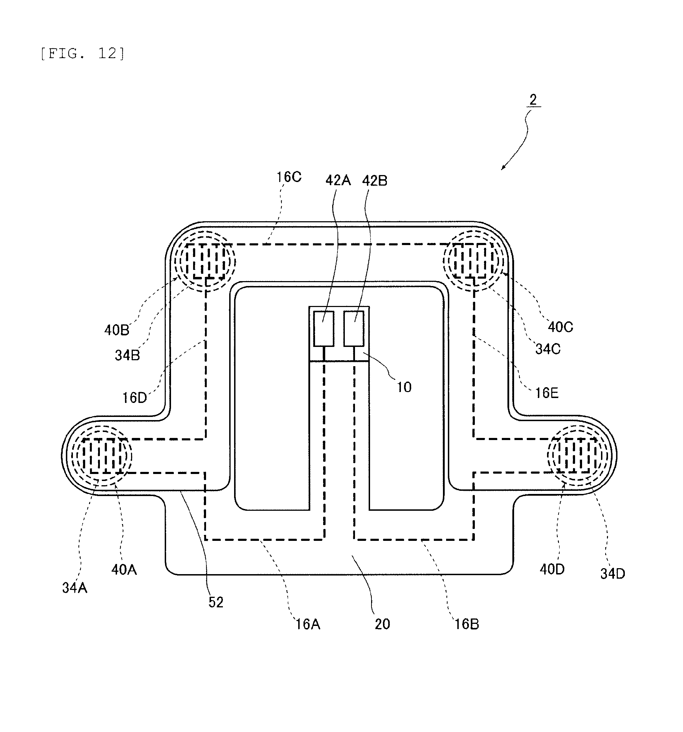

Next, a second embodiment of the invention will be described in detail by referring to FIGS. 12 to 15. Furthermore, the same reference numerals will be given to the same or equivalent components to those of the first embodiment except for the particular description, and the description thereof will not be repeated. FIG. 12 is a plan view illustrating a seat occupancy sensor which is used in a seat device according to the second embodiment of the invention.

As illustrated in FIG. 12, a seat occupancy sensor 2 of the embodiment is different from the seat occupancy sensor 1 of the first embodiment in that the first electrodes 14A to 14D of the pressure sensitive switches 40A to 40D are formed as comb electrodes.

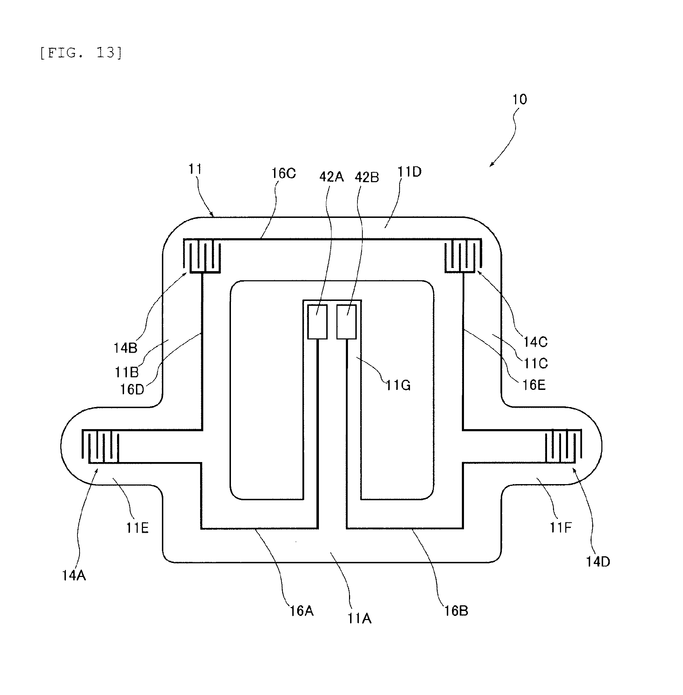

FIG. 13 is a plan view illustrating the first electrode sheet illustrated in FIG. 12. As illustrated in FIG. 13, in a comb electrode which constitutes each of the first electrodes 14A to 14D, a plurality of parallel conductors are connected to one another at one side, and a plurality of other parallel conductors are connected to each other at the other side. Then, the plurality of other parallel conductors connected to one another at the other side are disposed so as to enter between the plurality of parallel conductors connected to one another at one side, and hence the respective conductors are alternately arranged. Then, the plurality of parallel conductors connected to one another at one side and the plurality of other parallel conductors connected to one another at the other side are insulated from one another with a predetermined gap therebetween. In this way, in the comb electrode, a pair of parallel conductors is provided inside one electrode so as to be insulated from each other.

Then, the plurality of parallel conductors which are connected to one another at one side of the first electrode 14A are connected to the first wire 16A as in the first embodiment. Then, the plurality of other parallel conductors which are connected to one another at the other side of the first electrode 14A are connected to the first wire 16D. As described above, one end of the first wire 16D on the first insulating sheet 11 is connected to the plurality of other parallel conductors connected to one another at the other side in the first electrode 14A, extends in the length direction of the fifth portion 11E, is bent perpendicularly at the connection point between the fifth portion 11E and one second portion 11B, and further extends in the length direction of the second portion 11B, and the other end thereof is connected to the plurality of parallel conductors connected to one another at one side of the first electrode 14B. Further, the plurality of other parallel conductors which are connected to one another at the other side of the first electrode 14B are connected to one end of the first wire 16C as in the first embodiment, and the other end of the first wire 16C is connected to the plurality of parallel conductors which are connected to one another at one side of the first electrode 14C. The plurality of other parallel conductors which are connected to one another at the other side of the first electrode 14C are connected to one end of the first wire 16E. As described above, one end of the first wire 16E on the first insulating sheet 11 is connected to the plurality of other parallel conductors which are connected to one another at the other side of the first electrode 14C, extends in the length direction of the other third portion 11C, is bent perpendicularly at the connection point between the third portion 11C and the sixth portion 11F, and further extends in the length direction of the sixth portion 11F, and the other end thereof is connected to the plurality of parallel conductors which are connected to one another at one side of the first electrode 14D. Then, the plurality of other parallel conductors which are connected to one another at the other side of the first electrode 14D are connected to one end of the first wire 16B as in the first embodiment.

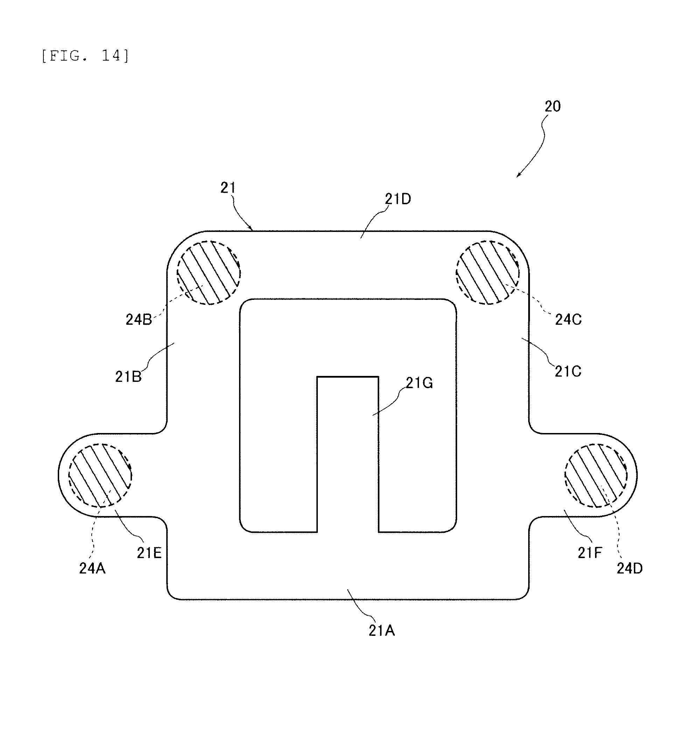

FIG. 14 is a plan view illustrating the second electrode sheet illustrated in FIG. 12. As illustrated in FIG. 14, the second electrode sheet 20 of the embodiment is different from the second electrode sheet 20 of the first embodiment in that the second wires 26A and 26B are not provided.

Then, as illustrated in FIG. 12, the first electrode sheet 10 and the second electrode sheet 20 illustrated in FIG. 13 overlap each other through the spacer 30 as in the first embodiment so as to be integrated.

As in the seat occupancy sensor 1 of the first embodiment, the seat occupancy sensor 2 of the embodiment is disposed in the seat device. When the person sits on the seat device so that the pressure sensitive switches 40A to 40D are pressed by the cushion pad and the seat pan, the second electrodes 24A to 24D respectively contact the parallel conductors in the first electrodes 14A to 14D.
For this reason, the pair of parallel conductors which is insulated from each other in the first electrodes 14A to 14D is electrically connected through the second electrodes 24A to 24D. In this way, the pressure sensitive switches 40A to 40D are turned on. When the pressure sensitive switches 40A to 40D are turned on in this way, the sitting of the person is detected by the seat occupancy sensor 2.

### (Third embodiment)

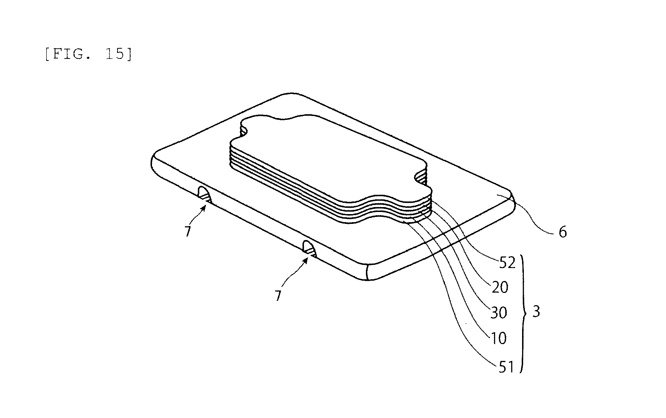

Next, a third embodiment of the invention will be described in detail by referring to FIGS. 15 to 18. Furthermore, the same reference numerals will be given to the same or equivalent components to those of the first embodiment except for the particular description, and the description thereof will not be repeated.

FIG. 15 is a plan view illustrating a seat occupancy sensor according to a third embodiment of the invention. As illustrated in FIG. 15, in the embodiment, a seat occupancy sensor 3 and a pedestal 6 are provided as main components. The seat occupancy sensor 3 has the same configuration as that of, for example, the seat occupancy sensor 1 of the first embodiment or the seat occupancy sensor 2 of the second embodiment. Furthermore, the shape of the seat occupancy sensor 3 illustrated in FIG. 15 is indicated by a shape different from those of the seat occupancy sensors of the first embodiment and the second embodiment for convenience of description.

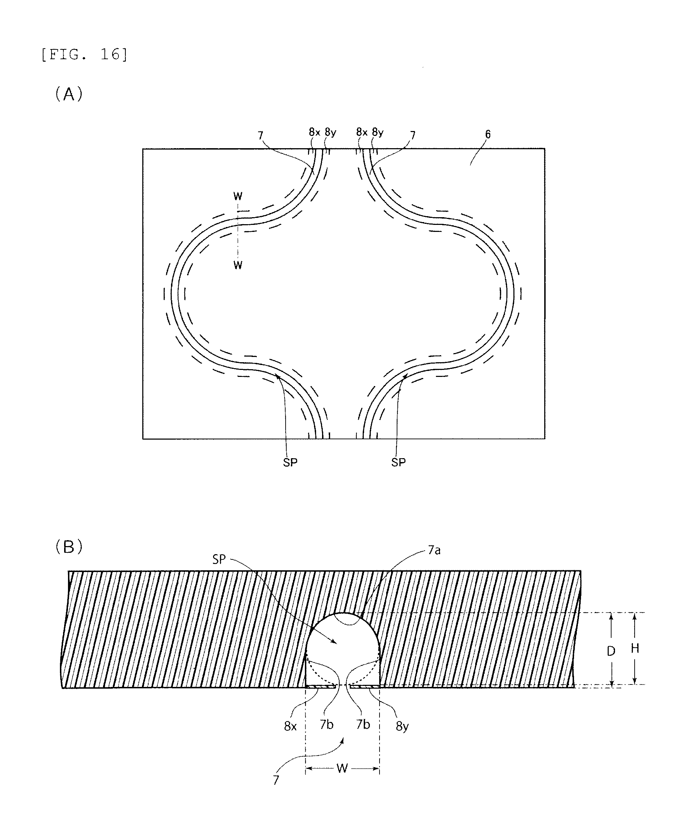

FIG. 16 is a plan view and a cross-sectional view illustrating a pedestal. Specifically, FIG. 16A is a plan view illustrating a state where the pedestal is viewed from one side, and FIG. 16B is a diagram illustrating a cross-section taken along the line W-W of FIG. 16A.

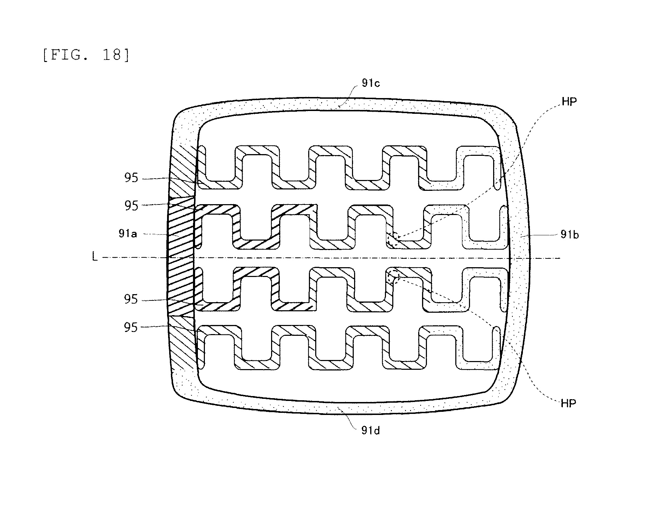

As illustrated in FIG. 16A, the pedestal 6 is a member that is attachable to or detachable from a part of two springs laid across the seat frame and places the seat occupancy sensor 3 above the spring. In the case of the embodiment, the pedestal 6 is formed as a flexible resinous plate, and the cushion member 51 (FIG. 18) of the seat occupancy sensor 3 is provided at one side of the wide surface of the pedestal 6 through an adhesive. Further, grooves 7 are formed in one surface of the pedestal 6 opposite to the installation side of the cushion member 51.

The grooves 7 are formed with spaces SP into which the respective portions of two springs laid across the seat frame are fitted. The direction of forming each groove 7 of the embodiment is formed so as to correspond to the direction of forming each of two spring portions laid across the seat frame so as to be adjacent to each other, and both ends of the groove 7 are opened to the side surfaces of the pedestal 6. Accordingly, the groove 7 may cause the spring portion in the middle of the spring provided along the bottom surface of the cushion pad to be fitted to one surface of the pedestal 6, and hence the spring portion may be intuitively recognized by the direction of forming the groove 7 formed in the pedestal 6.

As illustrated in FIG. 16B, a bottom portion 7a of the vertical cross-section of the groove 7 is formed in the same shape as that of the semi-circular-arc shape of the vertical cross-section of the spring as the attachment subject. For this reason, the groove 7 may cause a part of the spring laid across the seat frame to be fitted thereinto without forming a gap between the bottom portion 7a and the surface of the spring as the attachment subject.

Further, the side portions 7b of the groove 7 are formed in parallel to each other, and the distance (groove width) W therebetween is formed so as to be approximately equal to the diameter of the spring as the attachment subject. The depth D of the groove 7 is formed as a depth which is larger than the diameter of the spring as the attachment subject. For this reason, the groove 7 regulates the movement of the spring in the groove width direction. As a result, it is possible to remarkably reduce the rolling of the pedestal 6 which is disposed above the spring laid across the seat frame by the groove 7.

Moreover, the edges of the groove 7 in the length direction are connected with a pair of convex portions 8x and 8y which protrudes into the space SP of the groove 7. The convex portions 8x and 8y are formed as a flexible resinous plate, and face each other while being away for the same distance from the center of the groove 7 in the length direction. One wide surface of the convex portions 8x and 8y is flush with the wide surface of the pedestal 6 provided with the groove 7. Further, the height H between the farthest protruding position toward the groove 7 side in the convex portions 8x and 8y and the lowest position of the groove 7 is set to be smaller than the diameter of the spring. For this reason, the force in which the convex portions 8x and 8y return to the original shape serves as the force for suppressing the spring portion fitted into the groove 7. As a result, the convex portions 8x and 8y may largely reduce the amount in which the spring portion is separated from the groove 7.

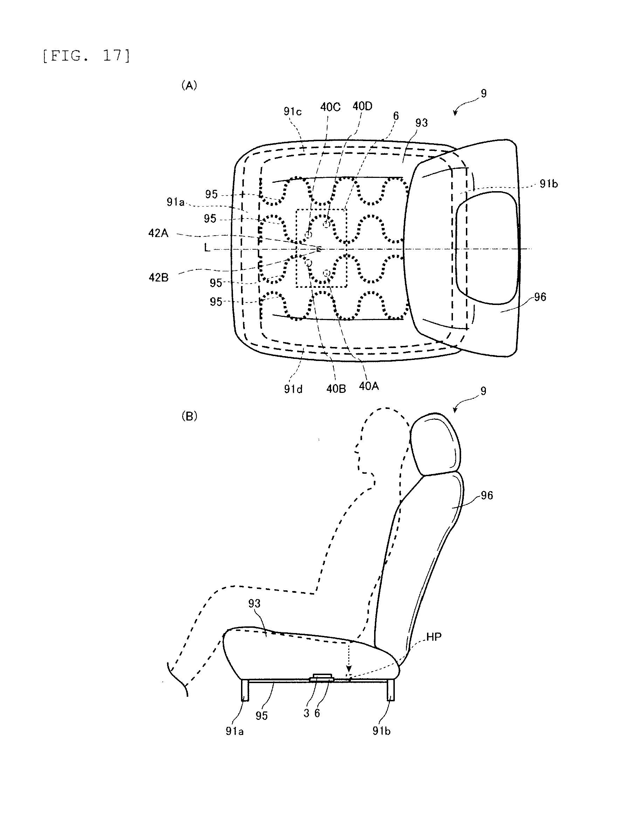

FIG. 17 is a diagram illustrating a state of the seat device according to the third embodiment of the invention. Specifically, FIG. 17A is a diagram illustrating a state where a seat device 90 provided with the seat occupancy sensor 3 is viewed from the upside, and FIG. 17B is a diagram illustrating a state where the seat device 90 provided with the seat occupancy sensor 3 is viewed from the lateral side. Furthermore, FIG. 17 illustrates the pressure sensitive switches 40A to 40D of the seat occupancy sensor of the first embodiment for convenience of description.

As illustrated in FIG. 17, the seat device 90 mainly includes a seat frame 91, a plurality of springs 95, the seat occupancy sensor 3, the cushion pad 93 having the same configuration as that of the first embodiment, and the backrest 96.

The seat frame 91 is formed as a frame structure including a front frame member 91a which is disposed as a frame of a front portion, a rear frame member 91b which is disposed as a frame of a rear portion, and a pair of side frame members 91c and 91d which are disposed as frames of the left and right portions. Further, the seat frame 91 includes an opening which is surrounded by the members 91a to 91d. The front frame member 91a and the side frame members 91c and 91d are formed as, for example, a product obtained by press-molding a sheet metal. The rear frame member 91b is formed as, for example, a metal pipe having a circular cross-section, and extends in the width direction of the vehicle, so that both ends thereof are connected to the rear ends of the side frame members 91c and 91d.

The plurality of springs 95 are support members that support the cushion pad 93, and are laid across the seat frame 91 while being away from one another by a predetermined gap. In the embodiment, each spring 95 is formed as a wire which repeatedly meanders in an S-shape on the same plane, where the front end of the spring 95 is attached to the front frame member 91a and the rear end of each spring 95 is attached to the rear frame member 91b.

Furthermore, the spring 95 is not limited to the S-shape, and may be formed in, for example, a Z-shape. A wire which meanders in various shapes may be employed, and a wire which meanders in a shape obtained by the combination of a plurality of shapes may be employed. Further, the spring 95 may be a wire which repeatedly and continuously meanders in one or plural shapes, a wire which meanders in one or plural shapes at a predetermined interval, and a wire which does not meander so as to be straight. Moreover, the plurality of springs 95 of the embodiment are provided across the front to rear direction, but may be provided across the left to right direction or the inclined direction.

The pedestal 6 which places the seat occupancy sensor 3 thereon is disposed on the spring 95, and is interposed between the spring 95 and the cushion pad 93. A method for disposing the seat occupancy sensor 3 on the spring 95 is that the pedestal 6 is press-inserted while the spring portion corresponding to the groove 7 of the spring 95 abuts against the convex portions 8x and 8y connected to the edges of the groove 7 in the length direction. Then, since the convex portions 8x and 8y have flexibility, the opening ends of the convex portions 8x and 8y are warped to the inside of the groove 7, and the spring portion enters the groove 7. In this way, the pedestal 6 is disposed on the spring 95 and the cushion pad 93 is disposed. Accordingly, the seat occupancy sensor 1 is disposed below the cushion pad 93 so as to receive the pressure from the cushion pad 93, and is interposed between the pedestal 6 and the cushion pad 93.

The pressure sensitive switches 40A to 40D of the seat occupancy sensor 3 are respectively disposed at the front side of the hip point HP. The pressure sensitive switches 40A and 40D are arranged in the width direction of the cushion pad so as to avoid the position present above the spring 95 in the vertical direction, and are formed so as to be bilaterally symmetrical to each other about the center line L. Further, the pressure sensitive switches 40B and 40C are arranged in the width direction of the cushion pad 93 at the front side of the pressure sensitive switches 40A and 40D so as to be present at the position above the spring 95 in the vertical direction, and are formed so as to be bilaterally symmetrical to each other about the center line L.

The terminals 42A and 42B which are connected to the pressure sensitive switches 40A to 40D are electrically connected to a power supply and a measurement unit (not illustrated) at the outside from the lower side of the seat frame 91.

FIG. 18 is a conceptual diagram illustrating a distribution of a load which is applied to the seat frame and the spring through the cushion pad when the person formally sits on the seat device of FIG. 17. Specifically, in FIG. 18, a region receiving the largest pressure from the cushion pad 93 is indicated by the right diagonal line, a region receiving the pressure which is large at the next place is indicated by the left diagonal line, and a region receiving a load which is smaller than the load applied to the region indicated by the right diagonal line and the left diagonal line is indicated by the dot. Furthermore, the right diagonal line is a line which is substantially parallel to the line connecting the right upper position of the drawing paper to the left lower position of the drawing paper, and the left diagonal line is a line which is substantially parallel to the line connecting the left upper position of the drawing paper to the right lower position of the drawing paper.

As illustrated in FIG. 18, the load which is applied to the spring portion and the seat frame portion (the right diagonal line portion) at the front side of the hip point HP increases compared to the spring portion (the left diagonal line portion) near the hip point HP. It is considered that this is because the gravity of the hip of the person formally sitting on the seat device and the gravity of the leg extending forward from the hip are exerted not only in the vertical direction but also in the front direction as described above.

As described above, since the pressure sensitive switches 40A to 40D are disposed at the front side of the hip point HP, a large pressure is applied to the pressure sensitive switches 40A to 40D compared to the hip point HP. Accordingly, the respective pressure sensitive switches 40A to 40D may appropriately detect the pressure generated by the sitting of the person when the person formally sits on the seat device.

Furthermore, as in the third embodiment, the pressure sensitive switches 40B and 40C are disposed in the region (the right diagonal line portion) which receives the largest pressure from the cushion pad 93, and the pressure sensitive switches 40A and 40D are disposed in the region (the left diagonal line portion) which receives the pressure that is large at the next place. However, in the case of the embodiment, the pressure sensitive switches 40A to 40D may be respectively disposed in the region (the right diagonal line portion) which receives the largest pressure from the cushion pad 93 or the region (the left diagonal line portion) which receives the pressure that is large at the next place.

As described above, according to the embodiment, the seat occupancy sensor 3 which includes the pressure sensitive switch 40 is disposed at the opposite surface to one surface of the pedestal 6 provided with the groove 7 which is fitted to a part of the spring laid across the seat frame. For this reason, when the predetermined portion of the plurality of spring 95 is fitted into the groove 7, the pressure sensitive switches 40A to 40D may be disposed above the spring 95 through the pedestal 6 even when the diameter of the spring 95 is small or the space between the springs 95 is large. Accordingly, the pressure sensitive switches 40A to 40D may be disposed between the spring 95 and the cushion pad 93 disposed on the spring 95 in a stable state. Furthermore, the pressure sensitive switches 40A to 40D may be disposed in a stable state even when the subject to place the cushion pad 93 thereon is the seat pan 92.

Incidentally, the pressure sensitive switches 40A to 40D have a cross-section larger than the diameter (the groove width of the groove 7) of the spring 95 as a wire. For this reason, there is a tendency that a large force is applied to the portion disposed above the spring 95 in the vertical direction compared to the portion not disposed thereabove in the vertical direction in the pressure sensitive switches 40B and 40C disposed above the spring 95 in the vertical direction. That is, there is a tendency that the distribution of the pressure with respect to one pressure sensitive switch 40B or 40C becomes non-uniform. The tendency noticeably occurs as the diameter of the spring 95 as the wire decreases. On the contrary, since the pressure sensitive switches 40A and 40D are disposed so as to avoid the position above the spring 95 in the vertical direction, the distribution of the pressure of the pressure sensitive switch 40A or 40D becomes roughly uniform. Accordingly, in the pressure sensitive switches 40A and 40D which are disposed to avoid the position above the spring 95 in the vertical direction, degradation in the durability is reduced due to the non-uniform pressure compared to the pressure sensitive switches 40B and 40C disposed above the spring 95 in the vertical direction. Further, since the periphery of the space of laying the spring 95 is roughly blocked so that the ventilation is not satisfactorily performed, heat is easily transferred from the spring 95 which is generally formed of metal. Accordingly, in the pressure sensitive switches 40A and 40D which are disposed so as to avoid the position above the spring 95 in the vertical direction, degradation in the durability is largely reduced due to the heating compared to the pressure sensitive switches 40B and 40C disposed above the spring 95 in the vertical direction. Meanwhile, as described above, the force against the pressure applied from the cushion pad 93 becomes larger in the pressure sensitive switches 40B and 40C which are disposed above the spring in the vertical direction compared to the pressure sensitive switches 40A and 40D which are not disposed above the spring 95 in the vertical direction. For this reason, the sensitivities of the pressure sensitive switches 40B and 40C become satisfactory compared to the pressure sensitive switches 40A and 40D.

Accordingly, an OR circuit is particularly useful which is formed by connecting the pressure sensitive switch 40B (40C) that is disposed above the spring 95 in the vertical direction in parallel to the pressure sensitive switch 40A (40D) that is disposed to avoid the position. This is because the advantage obtained by disposing the pressure sensitive switch above the spring 95 in the vertical direction and the advantage obtained by disposing the pressure sensitive switch to avoid the position may be both obtained.

Furthermore, since the cushion member 51 is provided in the bottom portion of the seat occupancy sensor 3 of the embodiment, it is possible to reduce the non-uniform distribution of the pressure with respect to the pressure sensitive switch 40B or 40C which is present above the spring 95 in the vertical direction.

### (Fourth embodiment)

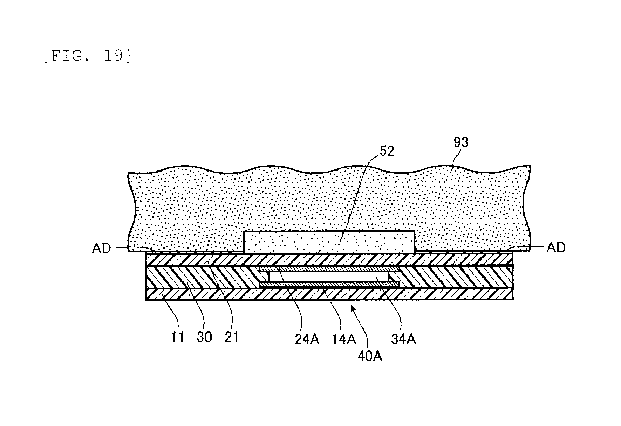

Next, a fourth embodiment of the invention will be described in detail by referring to FIG. 19. Furthermore, the same reference numerals will be given to the same or equivalent components to those of the first embodiment, and the description thereof will not be repeated, unless otherwise particularly described.

FIG. 19 is a diagram illustrating a state of a part of the seat occupancy sensor and a part of the seat device according to the fourth embodiment of the invention. Specifically, FIG. 19 is a diagram illustrating the vicinity of the pressure sensitive switch 40A of the seat occupancy sensor 1. As illustrated in FIG. 19, the seat occupancy sensor 1 of the embodiment is different from the seat occupancy sensor 1 of the first embodiment in that the seat occupancy sensor is bonded and fixed to the bottom surface of the cushion pad 93 by the adhesive AD applied on the surface of the second insulating sheet 21 so as to be disposed below the cushion pad 93.

Furthermore, the seat occupancy sensor 1 of the first embodiment includes the pair of cushion members 51 and 52, but the seat occupancy sensor 1 of the embodiment includes only the cushion member 52 on the side of the cushion pad 93, but does not include the cushion member 51 on the opposite side to the cushion pad 93.

Since the cushion pad 93 is provided with a concave portion and the cushion member 52 enters the concave portion, the cushion member 52 may be surrounded by the cushion pad 93 or the cushion member 52 may be surrounded by the cushion pad 93 while the cushion pad 93 is elastically deformed.

In this way, the seat occupancy sensor 1 which is bonded to the lower surface of the cushion pad 93 detects the sitting of the person as below. That is, when the person sits on the seat device, the cushion pad 93 is crushed to be warped downward by the load of the person.
At this time, the lower surface of the cushion pad 93 is warped so that a specific portion positioned at the front side of the hip point HP is present at the lowest position. Then, since the seat occupancy sensor 1 which is bonded to the lower surface of the cushion pad 93 receives the pressure from the cushion pad 93, the cushion member 52 which is pressed by the cushion pad 93 is deformed so as to enter the opening 34A of the pressure sensitive switch 40A. Then, the second insulating sheet 21 which is pressed against the cushion member 52 is deformed so as to enter the opening 34A along with the second electrode 24A disposed on the second insulating sheet 21, so that the first electrode 14A contacts the second electrode 24A. In this way, the pressure sensitive switch 40A is turned on. Further, as the lower surface of the cushion pad 93 is warped, the pressure sensitive switch 40A is warped with the warping of the lower surface of the cushion pad 93. That is, the first insulating sheet 11 and the second insulating sheet 21 are warped in the same direction. At this time, the second insulating sheet 21 disposed near the cushion pad 93 is disposed at the inner peripheral side of the warpage in relation to the first insulating sheet 11. Accordingly, the first electrode 14A and the second electrode 24A becomes further close to each other due to the inner and outer peripheral differences of the first insulating sheet 11 and the second insulating sheet 21 in the pressure sensitive switch 40A. As a result, the pressure sensitive switch 40A may be further easily turned on. Further, the other pressure sensitive switches 40B to 40D are also turned on in this way.

According to the seat occupancy sensor 1 and the seat device of the embodiment, since the sitting of the person may be detected without the placement member for displacing the seat occupancy sensor 1 thereon, the configuration of the seat device may be simplified.

Incidentally, when there is no placement member for placing the seat occupancy sensor 1, the lower side of the seat occupancy sensor 1 becomes a space. However, in this case, even when the seat occupancy sensor 1 receives the pressure, the insulating sheet 11 near the space is not warped, but the insulating sheet 21 near the cushion pad 93 is warped. Since the hardness of the cushion pad 93 is various in response to the type of vehicle, the pressure which is applied from the cushion pad 93 to the seat occupancy sensor 1 changes in response to the type of the cushion pad 93. However, in the embodiment, since the cushion member 52 is interposed between the cushion pad 93 and the insulating sheet 21, the cushion member 52 is deformed in the same way regardless of the hardness of the cushion pad 93, and enters the opening 34A of the pressure sensitive switch 40A. Accordingly, even when the cushion pad 93 is comparatively rigid, the insulating sheet may be appropriately warped by the cushion member 51.

Furthermore, in the embodiment, the seat occupancy sensor 1 does not include the cushion member 51, but may include the cushion member 51 as in the seat occupancy sensor 1 of the first embodiment. Further, the seat occupancy sensor 1 of the embodiment may not include the cushion member 52. In this case, it is preferred to bond the entire surface near the cushion pad 93 in the insulating sheet 21 to the lower surface of the cushion pad 93. In the seat occupancy sensor 1, the respective pressure sensitive switches are turned on in a manner such that the cushion pad 93 is deformed so as to enter the openings of the pressure sensitive switches when the person sits on the seat device, so that the sitting of the person may be detected.

Furthermore, in the embodiment, the seat occupancy sensor 1 is fixed to the lower surface of the cushion pad 93 by the bonding of the adhesive AD, but the seat occupancy sensor 1 may be fixed by a different method. For example, the seat occupancy sensor 1 may be fixed to the lower surface of the cushion pad 93 by a plurality of pins penetrating the circumferences of the respective pressure sensitive switches and bitten into the cushion pad 93.

As described above, the invention has been described by exemplifying the first to fourth embodiments, but the invention is not limited thereto.

For example, in the above-described embodiments, the number of the pressure sensitive switches is four, but the number of the pressure sensitive switches of the invention may be three or less or five or more. Furthermore, in the above-described embodiments, the pressure sensitive switches 40A and 40B and the pressure sensitive switches 40C and 40D are disposed so as to be axisymmetrical to one another about the center line L, but at least one of the pressure sensitive switches 40A and 40B and at least one of the pressure sensitive switches 40C and 40D may be disposed so as to be axisymmetrical to each other about the center line L. Further, the pressure sensitive switch may be disposed only at one side about the center line L.

Further, in the above-described embodiments, the pressure sensitive switches 40A to 40D are connected in series to one another, so that the pressure sensitive switches 40A to 40D configure an AND circuit as a whole. However, as the circuit configuration of the pressure sensitive switches 40A to 40D, the other circuit configurations may be employed. For example, the pressure sensitive switch group including the pressure sensitive switches 40A and 40B and the pressure sensitive switch group including the pressure sensitive switches 40C and 40D respectively configure an OR circuit, and the pressure sensitive switch groups configure an AND circuit, thereby configuring an AND-OR circuit. Alternatively, the respective pressure sensitive switches 40A to 40D may configure an OR circuit.

Further, the shapes of the seat occupancy sensors 1 to 3, the first electrode sheet 10, the second electrode sheet 20, and the spacer 30 are not limited to the above-described embodiments, and various shapes may be employed. Further, the electrodes of the first electrode sheet 10 and the second electrode sheet 20 and the opening of the spacer 30 are formed as a circular shape, but may be formed in a shape other than the circular shape. Furthermore, the warpage amount in the unit area about the position pressed by a predetermined pressure is set to be equal in the first insulating sheet 11 and the second insulating sheet 21, but may be set to be different.

Further, in the respective pressure sensitive switches 40A to 40D, the first electrodes 14A to 14D and the second electrodes 24A to 24D have the same shape and size, and hence completely overlap each other. However, the invention is not limited thereto, and the first electrodes 14A to 14D and the second electrodes 24A to 24D may have different sizes or shapes within the scope in which the pressure may be detected.

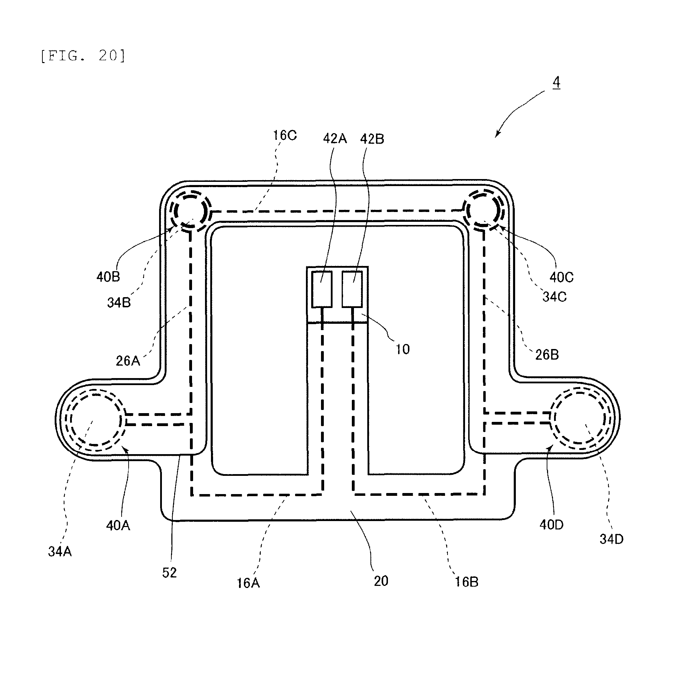

For example, as in the seat occupancy sensor 4 illustrated in FIG. 20, the diameters of the openings 34B and 34C of the pressure sensitive switches 40B and 40C may be smaller than the diameters of the openings 34A and 34D of the pressure sensitive switches 40A and 40D. In the seat occupancy sensor 4, the insulating sheets 11 and 21 of the pressure sensitive switches 40B and 40C are not easily warped compared to the pressure sensitive switches 40A and 40D, and the pressure sensitive switches 40B and 40C are not easily turned on compared to the pressure sensitive switches 40A and 40D. Meanwhile, the pressure which is applied from the cushion pad 93 when the person sits on the seat device decreases as it moves away from the center line L below the cushion pad 93. Since the pressure sensitive switches 40B and 40C are disposed near the center line L in relation to the pressure sensitive switches 40A and 40D, the pressure sensitive switches 40B and 40C are disposed at a place where the pressure sensitive switches 40B and 40C receive the large pressure compared to the pressure sensitive switches 40A and 40D. That is, the pressure sensitive switches 40B and 40C which are not easily turned on are disposed at a place where the pressure sensitive switches are pressed by a large pressure, and the pressure sensitive switches 40A and 40D which are easily turned on are disposed at a place where the pressure sensitive switches are pressed by a small pressure. Accordingly, a variation in the easiness of turning on the respective pressure sensitive switches 40A to 40D and the pressure applied from the cushion pad 93 to the seat pan 92 or the spring 95 are offset to each other. As a result, even when the plurality of pressure sensitive switches are disposed at positions where the pressure sensitive switches respectively receive different pressures, the sitting of the person may be appropriately detected.

Moreover, as in the above-described configuration, when at least two pressure sensitive switches are formed so as to have different opening diameters, it is preferred that at least two pressure sensitive switches having the same opening diameter be further provided and at least one of the pressure sensitive switches having the same opening diameter be provided at the left and right sides about the center line L. Since the person normally sits at the center of the cushion pad 93 in the width direction, the sitting of the person may be further appropriately detected, and hence it is possible to prevent a problem in which the baggage which is not disposed at the center of the cushion pad 93 in the width direction is erroneously detected as the sitting of the person. Then, with such a configuration, it is preferred that at least a pair of pressure sensitive switches having the same opening diameter and disposed at the left and right sides of the center line L be disposed along the width direction of the cushion pad 93 and it is further preferred that at least a pair of pressure sensitive switches having the same opening diameter and disposed at the left and right sides of the center line L be disposed at the symmetrical positions about the center line L. With such a configuration, the sitting of the person may be further appropriately detected, and hence it is possible to prevent a problem in which the baggage is erroneously detected as the sitting of the person. In such a configuration, for example, the positions of the pressure sensitive switches 40A to 40D are set as in the above-described embodiment, the diameters of the openings 34B and 34C of the pressure sensitive switches 40B and 40C are set to be smaller than the diameters of the openings 34A and 34D of the pressure sensitive switches 40A and 40D, the openings 34A and 34D of the pressure sensitive switches 40A and 40D are set to the same diameter, and the openings 34B and 34C of the pressure sensitive switches 40B and 40C are set to the same diameter.

Incidentally, the pressure sensitive switches 40A and 40D illustrated in FIG. 20 may be disposed to avoid the position present above the spring 95 in the vertical direction, and the pressure sensitive switches 40B and 40C illustrated in FIG. 20 may be disposed at the position present above the spring 95 in the vertical direction. In such an arrangement, the force against the pressure applied from the cushion pad 93 is large in the pressure sensitive switches 40B and 40C which are disposed above the spring in the vertical direction compared to the pressure sensitive switches 40A and 40D which are not disposed above the spring 95 in the vertical direction. Meanwhile, since the openings 34B and 34C of the pressure sensitive switches 40B and 40C are smaller than the openings 34A and 34D of the pressure sensitive switches 40A and 40D, the pressure sensitive switches 40B and 40C are not easily turned on compared to the pressure sensitive switches 40A and 40D as described above. That is, the pressure sensitive switches 40B and 40C which are not easily turned on are disposed at a position where the pressure sensitive switches are pressed by a large pressure, and the pressure sensitive switches 40A and 40D which are easily turned on are disposed at a position where the pressure sensitive switches are pressed by a small pressure. Accordingly, even when the respective pressure sensitive switches 40A to 40D are disposed at a place where the same pressure is applied from the cushion pad 93, a variation in the easiness of turning on the respective pressure sensitive switches 40A to 40D and the pressure applied to the pressure sensitive switches 40A to 40D may be offset to each other. As a result, the uniformity (balance) in which the respective pressure sensitive switches 40A to 40D are turned on may be improved.

Furthermore, in FIG. 20, the size of the opening is set as two types, that is, the size employed for the pressure sensitive switches 40A and 40D and the size employed for the pressure sensitive switches 40B and 40C, but may be set as three or more types. Further, when the size of the opening of the pressure sensitive switch is two types or more, it is preferred that the pressure sensitive switches with different openings be electrically connected in series to each other. For example, in the case of the pressure sensitive switches 40A to 40D illustrated in FIG. 20, the pressure sensitive switch 40A and the pressure sensitive switch 40B may be electrically connected in series to each other, and the pressure sensitive switch 40D and the pressure sensitive switch 40C may be electrically connected in series to each other. As in the above-described embodiments, the pressure sensitive switches 40A to 40D may be electrically connected in series to one another.

Further, in the above-described embodiments, the cushion member 51 is provided on the opposite surface to the surface near the spacer 30 in the insulating sheet 11, and the cushion member 52 is provided on the opposite surface to the surface near the spacer 30 in the insulating sheet 21. However, only the cushion member 51 may be provided by removing the cushion member 52. Even in this case, in the seat occupancy sensor, the cushion member 51 presses the insulating sheet 11 so that the insulating sheet 11 near the seat pan enters the opening of the spacer, and the insulating sheet 21 near the cushion pad 93 is warped by the elastic force of the cushion pad 93 so as to enter the openings 34A to 34D of the spacer 30. In this way, since the pair of insulating sheets is warped, the pair of electrodes facing each other through the opening of the spacer may contact each other, the pressure sensitive switch may be appropriately turned on, and hence the sitting may be appropriately detected. Moreover, the cushion members 51 and 52 are not essentially needed. Even in this case, since the cushion pad 93 presses the insulating sheet 21, the sitting of the person may be detected.

Furthermore, as in the above-described embodiments, when the pair of cushion members 51 and 52 is provided, the cushion members 51 and 52 have the same elastic force and are formed in the same thickness. However, the cushion members 51 and 52 may have different elastic forces and may be formed in different thicknesses. Furthermore, the crushed thickness of the cushion member 51 or 52 may be set to be a half or more of the distance between the facing electrodes in the respective pressure sensitive switches from the viewpoint of improving the sensitivity of the pressure sensitive switch.

Incidentally, when the cushion member 52 is not provided, the elastic force of the cushion member 51 may be set to be weaker than the elastic force of the cushion pad 93. In such a relation, it is possible to prevent the vibration generated from the seat pan 92 or the spring 95 from being transmitted to the pressure sensitive switch by the cushion member 51 of which the elastic force is weaker than that of the cushion pad 93. Accordingly, the pressure sensitive switch may be further stably operated and the sitting of the person may be stably detected. Alternatively, the elastic force of the cushion member 51 may be set to be stronger than the elastic force of the cushion pad 93. In such a relation, the cushion pad 93 is further contracted compared to the cushion member 51 when the person sits on the seat device, and the contraction of the cushion member 51 is suppressed. For this reason, it is possible to suppress a decrease in distance from the seat pan 92 to each pressure sensitive switch. Accordingly, since the heat transmitted from the seat pan 92 or the spring 95 to each pressure sensitive switch may be further absorbed by the cushion member 51, it is possible to suppress a change in pressure necessary for turning on the pressure sensitive switch in accordance with the temperature, and hence to suppress a change in load for detecting the sitting in accordance with the temperature.

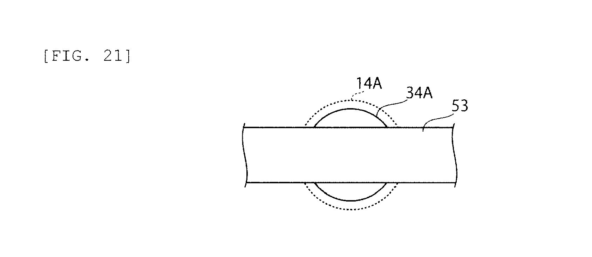

Further, in the above-described embodiments, the cushion member 51 or 52 is employed which covers the openings 34A to 34D in the spacer 30 through the insulating sheet 11 or 21 as a whole. However, a cushion member for covering each of the openings 34A to 34D may be employed. Further, the cushion member 51 or 52 is employed which covers the entire opening, but for example, as illustrated in FIG. 21, a cushion member 53 which covers a part of the openings 34A to 34D may be employed. Alternatively, although it is not illustrated in the drawings, a cushion member may be employed which covers a part of the openings 34A and 34D and covers the other entire openings. That is, a cushion member may be employed which covers at least a part of the respective openings 34A to 34D through the insulating sheet 11 or 21. Furthermore, as illustrated in FIG. 20, when the openings with two types or more sizes are employed, the sensitivities of the pressure sensitive switches 40A to 40D may be adjusted by setting the ratio (the blockage amount of the cushion member with respect to the opening) in which the cushion member covers the opening to be different for each of different openings. For example, the entire opening of any one of the pressure sensitive switch with a large opening and the pressure sensitive switch with a small opening is covered by the cushion member, and a part of the other opening is covered by the cushion member. In this way, even when there is a limitation in the place for disposing the pressure sensitive switches 40A to 40D, it is possible to improve the uniformity (balance) in which the respective pressure sensitive switches 40A to 40D are turned on.

Further, in the first embodiment and the second embodiment, the seat occupancy sensors 1 and 2 are placed on the seat pan 92. In the third embodiment, the seat occupancy sensor 3 is placed on the pedestal 6. However, the placement member for placing the seat occupancy sensor thereon is not limited to the above-described embodiment. For example, the seat frame 91 may be employed. Specifically, the seat occupancy sensor may be placed on the upper surface of the front frame member 91a, the rear frame member 91b, the side frame member 91c, or the side frame member 91d. Furthermore, as illustrated in FIG. 18, in these members 91a to 91d, the upper surface of the front frame member 91a receives the largest pressure from the cushion pad 93. For this reason, it is preferred that the upper surface of the front frame member 91a be set as a place for disposing the seat occupancy sensor from the viewpoint of improving the sensitivity of the pressure sensitive switch. Incidentally, when the number of the pressure sensitive switches to be disposed on the seat surface of the pedestal 6 is large, there is a tendency that the pedestal 6 increases in size, and hence there is an increasing possibility that the cushion performance of the cushion pad 93 may be degraded as the pedestal 6 increases in size. It is preferred that the upper surface of the seat pan 92 or the seat frame 91 be set as a place for disposing the seat occupancy sensor from the viewpoint of avoiding such a possibility regardless of the number of the pressure sensitive switches.

Further, in the third embodiment, the pedestal 6 which may be placed on two springs 95 is employed, but a pedestal which may be supported by the curved portion of one spring 95 may be employed. As such a pedestal, for example, a pedestal obtained by cutting the center of the pedestal 6 illustrated in FIG. 16A in the length direction may be exemplified.

Further, in the third embodiment, the pedestal 6 which places the seat occupancy sensor 3 above the spring 95 is employed, but the pedestal which places the seat occupancy sensor below the spring 95 may be employed. For example, a pedestal may be exemplified in which the seat surface of the seat is provided with the grooves 7, the grooves 7 are fitted to a part of two springs 95 from the downside, and the seat occupancy sensor is placed below two springs 95. In a case where such a pedestal is employed, the pressure sensitive switch may be disposed between the adjacent springs, and may be disposed directly below the spring.

Furthermore, the components of the seat occupancy sensor or the seat device of the invention may be appropriately combined with one another other than the above-described embodiments.

### Industrial Applicability

According to the invention, provided are the seat device for appropriately detecting the sitting of the person while preventing the discomfort caused by the seat occupancy sensor and the method for disposing the seat occupancy sensor used therein.

### Description of Reference Numerals

1 to 4 ... seat occupancy sensor
6 ... pedestal
7 ... groove
8x, 8y ... convex portion
9, 90 ... seat device
10 ... first electrode sheet
11 ... first insulating sheet
14A to 14F ... first electrode
16A to 16M ... first wire
20 ... second electrode sheet
21 ... second insulating sheet
24A to 24F ... second electrode
26A to 26E ... second wire
30 ... spacer
34A to 34F ... opening
36A to 36F ... slit
40A to 40D ... pressure sensitive switch
42A, 42B ... terminal
51 to 53 ... cushion member
91 ... seat frame
92 ... seat pan
93 ... cushion pad
94A, 94B ... hole
95 ... spring
96 ... backrest

## Claims

1. A seat device comprising:
a backrest;
a cushion pad;
a support member that supports the cushion pad; and
a seat occupancy sensor that includes at least one pressure sensitive switch and is disposed below the cushion pad,
wherein the pressure sensitive switch is disposed at the front side of a hip point of a person formally sitting on the seat device.

2. The seat device according to claim 1,
wherein the seat occupancy sensor includes at least two pressure sensitive switches, and
at least one of the pressure sensitive switches is disposed at each of the left and right sides about a center line that is parallel to the front to rear direction of the cushion pad and passes through the center in the width direction.

3. The seat device according to claim 2,
wherein at least a pair of the pressure sensitive switches disposed at the left and right sides of the center line is disposed along the width direction of the cushion pad.

4. The seat device according to claim 3,
wherein at least a pair of the pressure sensitive switches disposed at the left and right sides of the center line is disposed at symmetrical positions about the center line.

5. The seat device according to any one of claims 1 to 4,
wherein the support member is a seat pan, and the seat occupancy sensor is disposed between an upper surface of the seat pan and the cushion pad.

6. The seat device according to any one of claims 1 to 4,
wherein the support member is a plurality of springs laid across a seat frame, and the seat occupancy sensor is disposed between the spring and the cushion pad.

7. The seat device according to any one of claims 1 to 4,
wherein the support member is a plurality of springs laid across a seat frame, and the seat occupancy sensor is disposed between the seat frame and the cushion pad.

8. The seat device according to any one of claims 1 to 4,
wherein the seat occupancy sensor is fixed to a bottom surface of the cushion pad, and the lower side of the seat occupancy sensor fixed to the bottom surface is formed as a space.

9. The seat device according to claim 5,
wherein at least a part of the pressure sensitive switches are disposed at the front side of a band-like region that extends in the width direction of the cushion pad and becomes a maximum load region on the seat pan caused by the person formally sitting on the seat device.

10. The seat device according to claim 9,
wherein each pressure sensitive switch of at least the pair of pressure sensitive switches disposed at the left and right sides of the center line is disposed so as to at least partially overlap the band-like region.

11. The seat device according to claim 9 or 10, wherein the pressure sensitive switch close to the band-like region is disposed at a position far from the center line in relation to the pressure sensitive switch far from the band-like region.

12. The seat device according to any one of claims 1 to 11,
wherein the pressure sensitive switch includes:
a pair of flexible resinous insulating sheets;
a sheet-like spacer that is interposed between the pair of insulating sheets and is provided with at least one opening; and
a pair of electrodes that is provided on the respective surfaces of the pair of insulating sheets and faces each other through the opening, and
wherein a resistance value of at least one of the pair of electrodes increases with an increase in temperature.

13. The seat device according to any one of claims 1 to 11,
wherein the pressure sensitive switch includes:
a pair of flexible insulating sheets;
a sheet-like spacer that is interposed between the pair of insulating sheets and is provided with at least one opening;
a pair of electrodes that is provided on the respective surfaces of the pair of insulating sheets and faces each other through the opening; and
a cushion member that is provided at the side opposite to the spacer in at least one of the pair of insulating sheets and covers at least a part of the opening through the insulating sheet.

14. The seat device according to any one of claims 1 to 11,
wherein the pressure sensitive switch includes:
a pair of flexible insulating sheets;
a sheet-like spacer that is interposed between the pair of insulating sheets and is provided with at least one opening; and
a pair of electrodes that is provided on the respective surfaces of the pair of insulating sheets and faces each other through the opening, and
wherein the spacer is provided with the openings having at least two kinds of sizes.

15. The seat device according to claim 14,
wherein a ratio in which the cushion member covers the opening is different for each of different kinds of the openings.

16. A method for disposing a seat occupancy sensor including at least one pressure sensitive switch in a seat device including a backrest, a cushion pad, and a support member for supporting the cushion pad,
wherein the seat occupancy sensor is disposed while the pressure sensitive switch is positioned below the cushion pad and at the front side of a hip point of a person formally sitting on the seat device.
